# EUROPÄISCHE PATENTSCHRIFT

(11) **EP 3 394 122 B1**
(45) Veröffentlichungstag und Bekanntmachung des Hinweises auf die Patenterteilung: **12.02.2020**
(21) Anmeldenummer: 16808591.8
(22) Anmeldetag: 01.12.2016
(51) Int. Cl.: C08F 220/18, C08F 255/02, C10L 1/196

(54) **POLYMERZUSAMMENSETZUNGEN MIT VERBESSERTER HANDHABBARKEIT**
POLYMER COMPOSITIONS ALLOWING EASIER HANDLING
COMPOSITIONS DE POLYMÈRE À MANIABILITÉ AMÉLIORÉE

(30) Priorität: 23.12.2015 DE 102015226635
(43) Veröffentlichungstag der Anmeldung: 31.10.2018
(73) Patentinhaber: Clariant International Ltd, 4132 Muttenz (CH)
(72) Erfinder: FEUSTEL, Michael, 5527 Köngernheim (DE); KRULL, Matthias, 55278 Harxheim (DE); SIGGELKOW, Bettina, 65812 Bad Soden (DE); MÖRSCHER, Michael, 65929 Frankfurt (DE); GREGER, Ingo, 47179 Duisburg (DE); HAFERKAMP, Sebastian, Oberhausen 46047 (DE)
(74) Vertreter: Mikulecky, Klaus
(86) Internationale Anmeldenummer: PCT/EP2016/079357
(87) Internationale Veröffentlichungsnummer: WO 2017/108361

(56) Entgegenhaltungen:
- WO-A1-2014/095408
- DE-A1- 10 335 360
- US-A1- 2014 165 457

## Beschreibung

Gegenstand vorliegender Erfindung sind Polymerzusammensetzungen aus Poly(alkyl(meth)acrylaten) und Ethylen-Vinylester-Copolymeren mit verbesserter Handhabbarkeit bei niedrigen Temperaturen und deren Verwendung zur Verbesserung der Kaltfließeigenschaften von Rohölen sowie daraus hergestellten Destillaten und Rückstandsölen.

Rohöle wie auch die aus ihnen hergestellten Destillate und Destillationsrückstände sind komplexe Gemische verschiedenartiger Substanzen wie beispielsweise gesättigten und ungesättigten Kohlenwasserstoffen, Aromaten, Harzen und Asphaltenen. Bei der Abkühlung der Öle beispielsweise während Produktion, Transport, Lagerung und/oder Weiterverarbeitung können verschiedene der im Rohöl enthaltenen Substanzen Probleme bereiten. Insbesondere langkettige n-Paraffine können nach Unterschreiten einer ölspezifischen Temperatur ausfallen und ein dreidimensionales Netzwerk aus Schuppen und/oder feinen Nadeln ausbilden, in dem größere Mengen flüssiger Bestandteile eingelagert sind und festgehalten werden. Obgleich der Großteil des Öls noch flüssig ist, verliert das Öl dadurch seine Fließfähigkeit, wodurch zum Beispiel der Transport in Pipelines zum Erliegen kommen kann und in Lagertanks zwischen den insbesondere an den Tankwänden auskristallisierenden Paraffinen beträchtliche Mengen an Öl eingeschlossen werden können. Diese Problematik betrifft neben Rohölen auch die daraus hergestellten schwereren Produkte wie zum Beispiel Mitteldestillate, schweres Heizöl, Schiffsdiesel, Bunkeröl und Rückstandsöle, die größere Mengen an n-Paraffinen enthalten.

Daher werden paraffinhaltigen Mineralölen für Transport und Lagerung vielfach Additive zugesetzt, die die Fließfähigkeit des Öls bei niedrigen Temperaturen verbessern sollen. Bei diesen so genannten Paraffininhibitoren handelt es sich vorwiegend um öllösliche, synthetische polymere Verbindungen. Diese modifizieren die Kristallstruktur der bei Abkühlung ausfallenden Paraffine und verhindern die Ausbildung eines dreidimensionalen Netzwerks aus Paraffinkristallen. Teilweise fördern die Additive auch die Ausbildung feiner, gut kristallisierter und nicht agglomerierender Paraffinkristalle. Da derartige Additive den Pour Point (Stockpunkt) des Öls absenken werden sie auch als Pour Point Depressanten (PPD) bzw. Stockpunkterniedriger bezeichnet. Als Pour Point wird die niedrigste Temperatur bezeichnet, bei der eine Probe eines Öls beim Abkühlen gerade noch fließt. Der Stockpunkt von Ölen kann beispielsweise mittels DIN ISO 3016 und ASTM D97 bestimmt werden.

Häufig für die Paraffininhibierung eingesetzte Wirkstoffe sind Copolymere des Ethylens mit Vinylestern und/oder Alkyl(meth)acrylaten sowie Poly(alkyl(meth)acrylate), die unterschiedliche Wirkmechanismen besitzen. Bei den Ethylen-Copolymeren erfolgt die Cokristallisation mit Paraffinen über die Poly(ethylen)-Sequenzen der Hauptkette, deren mittlere Länge über den Comonomergehalt gesteuert werden kann. Bei den Poly(alkyl(meth)acrylaten) dagegen ist die Länge ihrer Seitenketten essentiell, die zur mittleren Kettenlänge und damit zum Kristallisationsverhalten der n-Alkane im zu additivierenden Öl passen muss. Besonders wirkungsvoll sind dabei lineare Alkylreste mit 18 und mehr C-Atomen. Poly(alkylacrylate) mit verzweigten Alkylresten wie beispielsweise dem 2-Tetradecyloctadecylrest haben gemäß WO 2010/003892 keine Wirksamkeit als PPD.

Zur Kombination der Eigenschaftsprofile beider Polymerklassen wurden auch Mischungen der beiden Polymere vorgeschlagen. Bei der Handhabung derartiger Additivkonzentrate, die durch Mischen beider Polymere hergestellt werden, treten oftmals Probleme mit Phasenseparation auf Grund von Polymerunverträglichkeiten auf.

Zur Lösung des Problems der Phasenseparation wurde vorgeschlagen, die Polymerisation des Alkylacrylats in Lösung und in Gegenwart des Ethylen-Vinylester-Copolymers durchzuführen. Nach allgemein akzeptierter Theorie wird dabei zumindest ein Teil der Alkylacrylat-Monomere auf das Ethylen-Vinylester-Copolymer aufgepfropft, während ein weiterer Teil polymerisiert ohne aufzupfropfen und somit Homo- bzw. bei Einsatz mehrerer Monomere Copolymere bildet. Das zumindest teilweise Pfropfen verhindert in der Folge, dass sich die Polymere im Additivkonzentrat separieren und ermöglicht somit die Behandlung des Öls mit einem immer gleich zusammengesetzten Additiv.

US 4608411 offenbart Pfropfpolymere von Poly(alkylacrylaten) auf Ethylen-Copolymere. Die zur Pfropfung eingesetzten Alkylacrylate leiten sich von Alkoholmischungen ab, die mindestens 20 Gew.-% an Alkylresten mit 22 oder mehr C-Atomen und einen Anteil an C₁₂-C₁₆-Alkoholen von weniger als 10 Gew.-% aufweisen.

EP 0384367 offenbart Mischungen aus hoch- und niedermolekularen Pfropfpolymeren von u. a. Alkyl(meth)acrylaten auf Ethylen-Vinylester-Copolymere als PPD für Brennstofföle. Zur Herstellung des zur Pfropfung eingesetzten Alkylacrylats wird beispielhaft eine Alkoholmischung aus 20 Gew.-% C₁₆-, 40 Gew.-% C₁₈-, 10 Gew.-% C₂₀- und 30 Gew.-% C₂₂-Alkoholen eingesetzt. Gemäß allgemeiner Beschreibung können bis zu 20 Gew.-% der Alkylketten des (Meth)acrylats verzweigt sein, ohne dass für diese Ausführungsform jedoch Beispiele oder Vorteile gezeigt worden wären.

EP 0406684 A offenbart Additive für Mitteldestillate, die mindestens zwei verschiedene Ethylen-Vinylacetat-Copolymere und gegebenenfalls ein Poly(alkyl(meth)acrylat) enthalten. In Beispiel 9 wird ein Poly(iso-decylmethacrylat) in Gegenwart einer Mischung zweier EVA-Copolymere hergestellt, das angeblich zu einer Mischung aus EVAs und einem Poly(alkylmethacrylat) führt.

EP 0486836 A1 offenbart Erdölmitteldestillate, beispielsweise Gasöle, Dieselöle oder Heizöle, welche zur Verbesserung der Fließeigenschaften in der Kälte polymere Zusätze enthalten. Bei den polymeren Zusätzen handelt es sich um Kombinationen üblicher Fließverbesserer auf Ethylenbasis, wie beispielsweise Copolymeren aus Ethylen und Vinylacetat, Vinylpropionat oder Ethylhexylacrylat sowie Copolymeren aus linearen oder verzweigten C₈- bis C₁₈-Alkyl(meth)acrylaten und linearen oder verzweigten C₁₈- bis C₂₈-Alkylvinylethern im Gewichtsverhältnis 40 : 60 bis 95 : 5. Die Copolymere aus Alkyl(meth)acrylaten und Alkylvinylethern und die konventionellen Fließverbesserer können als Mischung vorliegen oder die Copolymere aus den Alkyl(meth)acrylaten und/oder Alkylvinylethern können ganz oder teilweise auf die konventionellen Fließverbesserer aufgepfropft sein. Die Alkylreste sind dabei bevorzugt geradkettig und unverzweigt; es können aber bis zu 20 Gew.-% zyklische und/oder verzweigte Anteile enthalten sein. Im einzigen Beispiel zur Herstellung eines Pfropfcopolymers werden n- Dodecylacrylat und n-Octadecylvinylether auf ein Copolymer aus Ethylen und Vinylpropionat mit einem mittleren Molekulargewicht von ca. 2.500 aufgepfropft.

WO 2005/023907 offenbart Pour Point Depressanten, die ein Ethylen-Vinylacetat-Copolymer, ein mit Alkylacrylaten gepfropftes Ethylen-Copolymer und/oder ein Poly(alkylacrylat) enthalten. Die Alkyl(meth)acrylate haben 6 bis 40 und bevorzugt 14 bis 30 C-Atome im Alkylrest. Diese Mischungen werden als Dispersionen in Wasser formuliert.

WO 2005/097953 offenbart Pour Point Depressanten auf Basis von Copolymeren aus Maleinsäureanhydrid und Olefinen, die mit Aminen und gegebenenfalls Alkoholen umgesetzt wurden. In der Liste geeigneter Alkohole werden dabei auch C₁₂-C₃₆-Guerbet-Alkohole genannt, ohne dass diese beispielhaft belegt wurden.

EP 1808450 A offenbart mit Alkylacrylaten gepfropfte Copolymere aus Ethylen, Vinylacetat und einem weiteren Vinylester und deren Verwendung zur Verbesserung der Kaltfließeigenschaften von Brennstoffölen. Bevorzugte Pfropfauflagen sind Ester der Acrylsäure mit n- oder iso-C₈-C₂₂-Alkoholen.

WO 2011/035947 offenbart Zusammensetzungen, die ein Poly(alkyl(meth)acrylat) und ein von C₁-C₃₀-Alkyl(meth)acrylaten abgeleitete Struktureinheiten enthaltendes Ethylen-Vinylacetat-Copolymer umfassen sowie deren Verwendung als Fließverbesserer in Brennstoffölen. Beispielhaft belegt sind mit C₁₂/C₁₅-Alkylmethacrylat bzw. mit C₆-C₁₈-Alkylmethacrylat gepfropfte EVA-Copolymere.

WO 2014/095412 offenbart polymere Zusammensetzungen, die durch radikalische Polymerisation von Alkyl(meth)acrylaten in Gegenwart mindestens eines EVA-Copolymers erhältlich sind. Bei den Alkyl(meth)acrylaten handelt es sich dabei um eine Mischung aus (A1a) 50 - 99 mol-% mindestens eines Alkyl(meth)acrylats mit einem linearen C₁₂-C₆₀-Alkylrest und (A1b) 1 bis 49 mol-% mindestens eines Alkyl(meth)acrylats mit einem linearen C₁-C₁₁-Alkylrest, einem verzweigten C₄-C₆₀-Alkylrest und/oder einem zyklischen C₅-C₂₀-Alkylrest. Diese Zusammensetzungen sind als 48 %ige Einstellungen in Toluol bei Raumtemperatur flüssig ohne eine Phasentrennung zu zeigen. US 2014/165457 A1 offenbart weitere Polymerzusammensetzungen, erhältlich durch radikalisch Polymerisation von mindestens zwei verschiedenen Alkyl(meth)acrylaten in Gegenwart von mindestens einem Ethylen-Vinylester-Copolymerisat (B). Die Zusammensetzungen werden als Stockpunkterniedrigungsmittel für Rohöle, Mineralölen oder Mineralölprodukte verwendet. ¶

Die gebräuchlichen polymeren Paraffininhibitoren werden üblicherweise durch Lösungspolymerisation in organischen, vorwiegend aromatischen Lösemitteln hergestellt. Auf Grund der für eine gute Wirksamkeit erforderlichen paraffinartigen Strukturelemente und oftmals auch hoher Molekulargewichte dieser Polymere besitzen ihre konzentrierten Lösungen Eigenstockpunkte, die oftmals oberhalb der bei ihrer Verwendung herrschenden Umgebungstemperaturen liegen. Für den Einsatz müssen diese Additive folglich stark verdünnt und/oder bei erhöhten Temperaturen gehandhabt werden, was beides zu unerwünschtem Mehraufwand führt. Alternativ wurden zweiphasige Formulierungen vorgeschlagen, in denen der Paraffininhibitor in einem polaren Nichtlösemittel wie beispielsweise Wasser und/oder Alkohol dispergiert bzw. suspendiert vorliegt. Zur Erzielung der gewünschten Paraffininhibierung muss das Polymer bei diesen Additiven aus seiner polaren Matrix in das unpolare Öl überführt werden, was insbesondere bei niedrigen Temperaturen oftmals Schwierigkeiten bereitet und sich in einer abgeschwächten Wirksamkeit bemerkbar macht.

Problematisch bei den Pfropfpolymeren des Standes der Technik sind eine oftmals unzureichende Fließfähigkeit der Konzentrate bei sehr niedrigen Temperaturen wie beispielsweise bei 10 °C, bei 5 °C oder auch bei 0 °C, was z. B. bei der Lagerung in unbeheizten Lagertanks, wie sie vielfach in abgelegenen Fördergebieten zu finden sind eine starke Verdünnung der Additive erfordert. Auch beim Einsatz der Additive bei niedrigen Temperaturen wie beispielsweise in Tiefsee-Förderungen oder auch in Terminals sind für den unterbrechungsfreien Einsatz eine starke Verdünnung der Additive und/oder ein Beheizen der Förderleitungen erforderlich. Zudem bilden die Additive während längerer Lagerung beispielsweise über mehrere Tage bis Wochen oftmals auch oberhalb des Stockpunkts Gelphasen, die zu einem Verlust ihrer Fließfähigkeit führen. In einigen Fällen ist auch die Wirksamkeit in speziellen Ölen unbefriedigend.

Es wurden folglich Additive gesucht, die als Paraffininhibitoren und speziell als Pour Point Depressanten für paraffinhaltige Mineralöle geeignet sind und als Konzentrate bei niedrigen Temperaturen von unter 10 °C, speziell unter 5 °C und insbesondere unter 0 °C fließfähig und pumpbar sind. Diese Additive sollen über einen längeren Zeitraum von mehreren Tagen bis Wochen auch bei niedrigen Lagertemperaturen ihre anwendungstechnischen sowie physikalischen Eigenschaften wie insbesondere ihre Fließfähigkeit beibehalten. Darüber hinaus sollen sie eine große Breitenwirksamkeit in verschiedenen Ölen zeigen. Überraschenderweise wurde gefunden, dass Polymerzusammensetzungen, die durch radikalische Polymerisation von Mischungen aus Alkyl(meth)acrylaten, die sich von linearen C₁₆-C₄₀-Fettalkoholen einerseits und von einfach verzweigten, in 2-Stellung einen C₈-C₂₀-Alkylrest tragenden C₁₂-C₄₀-Alkoholen andererseits ableiten, in Gegenwart von Copolymeren aus Ethylen und ungesättigten Estern zugänglich sind, eine hervorragende Stockpunktabsenkung in paraffinhaltigen Roh- und Rückstandsölen wie auch in verschiedenen weiteren aus Rohölen hergestellten Produkten bewirken. Ihre Konzentrate in Kohlenwasserstoffen sind auch bei Temperaturen unter 10 °C, vielfach unter 5 °C und oftmals unter 0 °C fließfähig. Sie sind somit auch bei niedrigen Temperaturen verwendbar ohne dass es beheizter Vorratsbehälter und/oder Förderleitungen bedarf.

Gegenstand der Erfindung sind Polymerzusammensetzungen, gemäß den Ansprüchen erhältlich durch radikalische Polymerisation von
A) 95 - 40 Gew.-% Alkyl(meth)acrylat, enthaltend
   Ai) 20 - 95 Gew.-% mindestens eines Alkyl(meth)acrylats mit 16 bis 40 C-Atomen im Alkylrest und
   Aii) 5 - 80 Gew.-% mindestens eines (Meth)acrylsäureesters eines in 2-Stellung zur Hydroxylgruppe einen C₆-C₂₀-Alkylrest tragenden C₈-C₂₂-Alkohols, in Gegenwart von
B) 5 - 60 Gew.-% mindestens eines Ethylen-Copolymers.

In einer bevorzugten Ausführungsform der Erfindung umfasst die Polymerzusammensetzung weiterhin Kohlenwasserstoffe als Löse- bzw. Dispergiermittel. Besonders bevorzugte Löse- bzw. Dispergiermittel sind aromatische Kohlenwasserstoffe.

Ein weiterer Gegenstand der Erfindung ist ein Verfahren zur Herstellung der Polymerzusammensetzungen, bei dem das Gemisch aus A und B, gegebenenfalls in Gegenwart eines Lösemittels, durch Zugabe eines Radikalkettenstarters polymerisiert wird.

Ein weiterer Gegenstand der Erfindung ist die Verwendung der Polymerzusammensetzungen, bevorzugt als Lösung oder Dispersion in Kohlenwasserstoffen, zur Verbesserung der Kälteeigenschaften wie beispielsweise der Absenkung des Pour Points und/oder des Yield-Stress oder auch der Verbesserung der Paraffindispergierung in Rohölen, Rückstandsölen und auch Mineralölprodukten.

Die Formulierung Alkyl(meth)acrylate umfasst dabei in allen Fällen Ester der Acrylsäure wie auch der Methacrylsäure.

Monomere Ai) weisen die allgemeine Formel (1)

H₂C = C(R²) - COOR³ (1)

auf, wobei
- R²: für H oder eine Methylgruppe und bevorzugt für H steht und
- R³: für einen linearen Alkylrest mit 16 bis 40 Kohlenstoffatomen, bevorzugt 18 bis 36 Kohlenstoffatomen, besonders bevorzugt 18 bis 30 Kohlenstoffatomen wie beispielsweise 18 bis 26 Kohlenstoffatomen steht.

Bevorzugte Monomere Ai) sind Ester der Acrylsäure, wobei R² für Wasserstoff steht.

Beispiele für bevorzugte Reste R³ sind der 1-Hexadecyl-, 1-Octadecyl-, 1-Nonadecyl-, 1-Eicosyl-, 1-Heneicosyl-, 1-Docosyl-, 1-Tetracosyl-, 1-Hexacosyl-, 1-Octacosyl- und der 1-Tricontylrest. Beispiele für bevorzugte Monomere Ai) sind Hexadecylacrylat, Octadecylacrylat, Nonadecylacrylat, Eicosylacrylat, Heneicosylacrylat, Docosylacrylat, Tetracosylacrylat und Hexacosylacrylat.

Besonders bevorzugt werden Mischungen verschiedener Alkyl(meth)acrylate Ai) eingesetzt. Beispielsweise können Gemische eingesetzt werden, bei denen R³ für C₁₆- und C₁₈-Reste oder für C₁₈-, C₂₀- und C22-Reste steht. In einer bevorzugten Ausführungsform handelt es sich bei mindestens einem der eingesetzten Alkyl(meth)acrylate Ai) um 1-Docosyl(meth)acrylat und insbesondere um 1-Docosylacrylat, d. h. R³ steht für einen linearen Alkylrest mit 22 Kohlenstoffatomen. In einer besonders bevorzugten Ausführungsform der Erfindung handelt es sich bei mindestens 25 Gew.-% der eingesetzten Alkyl(meth)acrylate Ai) um 1-Docosylacrylat. Vorteilhaft können Gemische umfassend 1-Octadecyl-(meth)acrylat, 1-Eicosyl(meth)acrylat und 1-Docosyl(meth)acrylat eingesetzt werden. Derartige Gemische verschiedener (Meth)acrylate sind beispielsweise durch Veresterung entsprechender Fettalkoholmischungen mit Acrylsäure bzw. Methacrylsäure zugänglich. Teilweise sind sie auch kommerziell erhältlich. Sie können neben den genannten C₁₈/C₂₀/C₂₂-(Meth)acrylaten noch geringe Mengen von (Meth)acrylaten mit höherer oder niedrigerer Kohlenstoffzahl als Nebenprodukte umfassen. Beispielsweise kann es sich um Gemische handeln, welche 30 bis 50 Gew.-% 1-Octadecyl(meth)acrylat, 10 bis 20 Gew.-% 1-Eicosyl(meth)methacrylat sowie 30 bis 60 Gew.-% 1-Docosyl(meth)acrylat umfassen. Besonders bevorzugt sind Gemische der oben genannten Acrylate.

Bevorzugte Alkyl(meth)acrylate Aii) weisen die allgemeine Formel (2) 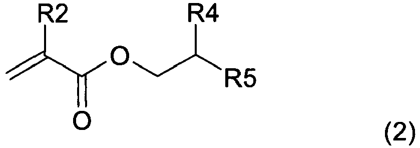 auf, wobei
- R²: die bereits definierte Bedeutung hat und
- R⁴ und R⁵: unabhängig voneinander für einen gesättigten, linearen Alkylrest mit 6 bis 20 C-Atomen stehen und die Summe der Kohlenstoffatome in R⁴ und R⁵ zwischen 16 und 40 liegt.

Bevorzugt leiten sich die Alkyl(meth)acrylate Aii) von Cs- bis C₂₂-Alkoholen ab, die in 2-Stellung zur Hydroxylgruppe einen Alkylrest mit 6 bis 20 C-Atomen tragen. Bevorzugte Alkohole zur Herstellung der Ester der Formel (2) besitzen insgesamt 18 bis 36 und speziell 18 bis 32 C-Atome, das heißt die Summe der Kohlenstoffatome in den Resten R⁴ und R⁵ beträgt bevorzugt 16 bis 34 und speziell 16 bis 30. Bevorzugt tragen die Alkylreste R⁴ und R⁵ der Alkyl(meth)acrylate Aii) eine unterschiedliche Anzahl an C-Atomen. In einer besonders bevorzugten Ausführungsform besitzt einer der Reste R⁴ und R⁵ vier C-Atome mehr als der andere. Diese 2-Alkyl-1-alkanole werden auch als Guerbet-Alkohole bezeichnet. Besonders bevorzugt sind die oben genannten Alkylacrylate Aii).

Die Alkyl(meth)acrylate Aii) sind von den Alkyl(meth)acrylaten Ai) und gegebenenfalls Aiii) verschieden.

Die Alkyl(meth)acrylate A) enthalten 20 bis 95 Gew.-%, bevorzugt 25 bis 90 Gew.-%, und insbesondere 30 bis 60 Gew.-% wie beispielsweise 20 bis 90 Gew.-%, 20 bis 60 Gew.-%, 25 bis 95 Gew.-%, 25 bis 60 Gew.-%, 30 bis 95 Gew.-% oder 30 bis 90 Gew.-% mindestens eines Alkyl(meth)acrylats Ai). Weiterhin enthalten sie 5 bis 80 Gew.-%, besonders bevorzugt 10 bis 60 Gew.-% und insbesondere 20 bis 55 Gew.-% wie beispielsweise 5 bis 60 Gew.-%, 5 bis 55 Gew.-%, 10 bis 80 Gew.-%, 10 bis 55 Gew.-% mindestens eines Alkyl(meth)acrylats Aii). In einer speziellen Ausführungsform ergänzen sich die Mengen an Alkyl(meth)acrylat Ai) und Alkyl(meth)acrylat Aii) zu 100 %.

Gegebenenfalls können die Alkyl(meth)acrylate A) 0 bis 40 Gew.-%, bevorzugt 2 bis 35 Gew.-% und speziell 5 bis 30 Gew.-% wie beispielsweise 0 bis 35 Gew.-%, 0 bis 30 Gew.-%, 2 bis 40 Gew.-%, 2 bis 30 Gew.-%, 5 bis 40 Gew.-% oder auch 5 bis 35 Gew.-% einer oder mehrerer weiterer Struktureinheiten, die sich von weiteren ethylenisch ungesättigten Verbindungen Aiii) ableiten, enthalten.

Geeignete weitere ethylenisch ungesättigte Verbindungen Aiii) sind beispielsweise ethylenisch ungesättigte Ester der allgemeinen Formel (3)

H₂C = C(R²) - COOR⁶ (3)

wobei
- R²: die bereits definierte Bedeutung hat und
- R⁶: für einen linearen Alkylrest mit 1 bis 11, bevorzugt 2 bis 10 und insbesondere 2 bis 6 C-Atomen, für einen verzweigten Alkylrest mit 4 bis 17, bevorzugt 4 bis 16, besonders bevorzugt 4 bis 15 Kohlenstoffatomen oder für einen zyklischen Alkylrest mit 5 bis 20, bevorzugt 6 bis 12, besonders bevorzugt 6 bis 10 Kohlenstoffatomen steht.

Beispiele für lineare Alkylreste R⁶ umfassen Methyl, Ethyl-, n-Propyl, n-Butyl, n-Pentyl, n-Hexyl, n-Heptyl-, n-Octyl-, n-Nonyl-, n-Decyl- und n-Undecylreste, bevorzugt sind n-Propyl, n-Butyl, n-Pentyl, n-Hexyl, n-Heptyl-, n-Octyl-, n-Nonyl-und n-Decylreste, besonders bevorzugt sind Ethyl-, n-Propyl, n-Butyl, n-Pentyl und n-Hexylreste und ganz besonders bevorzugt sind n-Butylreste. Beispiele für geeignete Alkyl(meth)acrylate mit linearem Alkylrest sind Ethyl(meth)acrylat, Propyl(meth)acrylat, Butyl(meth)acrylat, Pentyl(meth)acrylat und Hexyl(meth)acrylat.

Verzweigte Alkylreste R⁶ können einfach oder mehrfach verzweigt sein. Beispiele für verzweigte Alkylreste R⁶ umfassen i-Butyl-, t-Butyl-, 2,2'-Dimethylpropyl-, 2-Ethylhexyl-, 2-Propylheptyl-, i-Nonyl-, i-Decyl-, i-Tridecyl-, i-Heptadecylreste sowie die von Oligomeren des Propens, n-Butens und Isobutens abgeleiteten Alkylreste wie Tripropenyl-, Tetrapropenyl-, Pentapropenyl-, Tributenyl- und Tetrabutenylreste. Bevorzugt sind t-Butyl-, 2-Ethylhexyl-, 2-Propylheptylreste sowie Tetrapropenyl- und Tributenylreste. Beispiele für geeignete Alkyl(meth)acrylate mit verzweigtem Alkylrest sind t-Butyl(meth)acrylat, 2-Ethylhexyl(meth)acrylat, 2-Propylheptyl(meth)acrylat sowie Tetrapropenyl(meth)acrylat und Tributenyl(meth)acrylat.

Zyklische Alkylreste R⁶ können monozyklisch oder polyzyklisch sein, bevorzugt sind sie bizyklisch. Sie können weiterhin mit linearen und/oder verzweigten Alkylresten substituiert sein. Beispiele zyklischer Alkylreste R⁶ umfassen Cyclopentyl-, Cyclohexyl-, 4-Methylcyclohexyl-, Cycloheptyl-, Bicyclo[2.2.1]heptyl-, Bicyclo[2.2.2]octyl- oder 2-(1,7,7-Trimethylbicyclo[2.2.1]heptylreste. Beispiele für geeignete Alkyl(meth)acrylate mit zyklischem Alkylrest sind Cyclohexyl(meth)acrylat und Bicyclo[2.2.1]heptyl(meth)acrylat.

Weitere Beispiele für ethylenisch ungesättigte Verbindungen Aiii) sind Vinylester von Carbonsäuren mit 1 bis 20 C-Atomen, α-Olefine mit 6 bis 40 C-Atomen, Vinylaromaten, ethylenisch ungesättigte Dicarbonsäuren sowie deren Anhydride und Ester mit C₁₀-C₃₀-Fettalkoholen, Acrylsäure, Methacrylsäure und insbesondere weitere funktionelle Gruppen tragende ethylenisch ungesättigte Verbindungen wie beispielsweise Hydroxyethylacrylat, Hydroxypropylacrylat, Hydroxybutylacrylat, p-Acetoxystyrol, Acrylsäurebenzylester, Methoxyessigsäurevinylester, Dimethylaminoethylacrylat, Perfluoralkylacrylat, die Isomere des Vinylpyridins und seiner Derivate, N-Vinylpyrrolidon sowie (Meth)acrylamid und seine Derivate wie N-Alkyl(meth)acrylamide mit C₁-C₂₀-Alkylresten.

Auch Vinyl- und Allylpolyglykole der Formel (4) sind als weitere ethylenisch ungesättigte Verbindungen Aiii) geeignet, 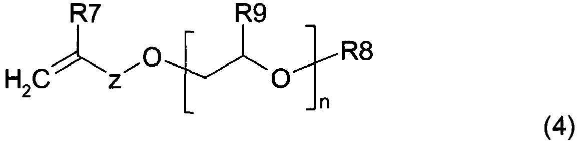 worin
- R⁷: für Wasserstoff oder Methyl steht,
- Z: für C₁-C₃-Alkylen oder eine Einfachbindung zwischen dem R⁷ tragenden Kohlenstoffatom und dem Sauerstoffatom steht,
- R⁸: für Wasserstoff, C₁-C₃₀-Alkyl, Cycloalkyl, Aryl oder -C(O)-R¹⁰ steht,
- R⁹: für Wasserstoff oder C₁-C₂₀-Alkyl steht,
- R¹⁰: für C₁-C₃₀-Alkyl, C₃-C₃₀-Alkenyl, Cycloalkyl oder Aryl steht und
- m: eine Zahl von 1 bis 50, vorzugsweise 1 bis 30 bedeutet.

Der Begriff "Aryl" steht, sofern nicht anders angegeben, für einen ein- oder zweikernigen, carbocyclischen aromatischen Rest.

Der Begriff "Cycloalkyl" steht, sofern nicht anders angegeben, für einen Cycloalkylrest mit 4 bis 8 Kohlenstoffatomen.

Auch Mischungen mehrerer verschiedener ethylenisch ungesättigter Verbindungen Aiii können erfindungsgemäß eingesetzt werden. Sofern Mischungen verschiedener Monomere Aiii) eingesetzt werden, liegt deren Gesamtmenge im oben für Aiii) beschriebenen Bereich.

In einer bevorzugten Ausführungsform der Erfindung enthalten die Alkyl(meth)acrylate A) das Monomer Aiii). Sofern Alkyl(meth)acrylate Aiii) in den Alkyl(meth)acrylaten A) enthalten sind, können die einzelnen Alkyl(meth)acrylate Ai), Aii) und Aiii) in den jeweils bevorzugten Mengenbereichen enthalten sein.

Bei Anwesenheit eines Alkyl(meth)acrylats Aiii) enthalten die Alkyl(meth)acrylate A) bevorzugt 20 bis 93, insbesondere 25 bis 85 und speziell 30 bis 65 Gew.-% wie beispielsweise 20 bis 85 Gew.-%, 20 bis 65 Gew.-%, 25 bis 93 Gew.-%, 20 bis 65 Gew.-%, 30 bis 93 Gew.-% oder 30 bis 85 Gew.-% Ai).

Bei Anwesenheit eines Alkyl(meth)acrylats Aiii) enthalten die Alkyl(meth)acrylate A) bevorzugt 5 bis 78, insbesondere 10 bis 65 und speziell 15 bis 55 Gew.-% wie beispielsweise 5 bis 65 Gew.-%, 5 bis 55 Gew.-%, 10 bis 78 Gew.-%, 10 bis 55 Gew.-%, 15 bis 78 Gew.-% oder 15 bis 65 Gew.-% Aii).

Bei Anwesenheit eines Alkyl(meth)acrylats Aiii) enthalten die Alkyl(meth)acrylate A) bevorzugt 2 bis 40, insbesondere 5 bis 40 und speziell 5 bis 30 Gew.-% wie beispielsweise 2 bis 30 Gew.-% Aiii).

In besonders bevorzugten Ausführungsform enthalten die Alkyl(meth)acrylate A)
20 bis 93 Gew.-% Ai), 5 bis 78 Gew.-% Aii) und 2 bis 40 Gew.-% speziell 5 bis 40 Gew.-% und insbesondere 5 bis 30 Gew.-% Aiii),
20 bis 93 Gew.-% Ai), 10 bis 65 Gew.-% Aii) und 2 bis 40 Gew.-% speziell 5 bis 40 Gew.-% und insbesondere 5 bis 30 Gew.-% Aiii),
20 bis 93 Gew.-% Ai), 15 bis 55 Gew.-% Aii) und 2 bis 40 Gew.-% speziell 5 bis 40 Gew.-% und insbesondere 5 bis 30 Gew.-% Aiii),
25 bis 85 Gew.-% Ai), 5 bis 78 Gew.-% Aii) und 2 bis 40 Gew.-% speziell 5 bis 40 Gew.-% und insbesondere 5 bis 30 Gew.-% Aiii),
25 bis 85 Gew.-% Ai), 10 bis 65 Gew.-% Aii) und 2 bis 40 Gew.-% speziell 5 bis 40 Gew.-% und insbesondere 5 bis 30 Gew.-% Aiii),
25 bis 85 Gew.-% Ai), 15 bis 55 Gew.-% Aii) und 2 bis 40 Gew.-% speziell 5 bis 40 Gew.-% und insbesondere 5 bis 30 Gew.-% Aiii),
30 bis 65 Gew.-% Ai), 5 bis 78 Gew.-% Aii) und 2 bis 40 Gew.-% speziell 5 bis 40 Gew.-% und insbesondere 5 bis 30 Gew.-% Aiii),
30 bis 65 Gew.-% Ai), 10 bis 65 Gew.-% Aii) und 2 bis 40 Gew.-% speziell 5 bis 40 Gew.-% und insbesondere 5 bis 30 Gew.-% Aiii) und
30 bis 65 Gew.-% Ai), 15 bis 55 Gew.-% Aii) und 2 bis 40 Gew.-% speziell 5 bis 40 Gew.-% und insbesondere 5 bis 30 Gew.-% Aiii),

Als Copolymere aus Ethylen und ethylenisch ungesättigten Estern, Ethern oder Alkenen (B) eignen sich insbesondere solche, die neben Ethylen 4 bis 18 mol-%, insbesondere 7 bis 15 mol-% und speziell 8 bis 14 mol-% wie beispielsweise 4 bis 17 mol-%, 4 bis 14 mol-%, 7 bis 18 mol-%, 7 bis 14 mol-%, 8 bis 18 mol-% oder 8 bis 15 mol-% mindestens eines Vinylesters, Acrylsäureesters, Methacrylsäureesters, Alkylvinylethers und/oder Alkens enthalten. Bevorzugt sind die Comonomere Vinylester, Acrylsäureester und/oder Methacrylsäureester. Sollte das Ethylen-Copolymer zwei (Terpolymer) oder mehr, wie beispielsweise drei (Tetrapolymer) oder vier (Pentapolymer), verschiedene Comonomere enthalten, so beziehen sich die oben spezifizierten molaren Comonomergehalte auf die Summe aller Comonomergehalte.

Bei den für die Copolymerisation mit Ethylen bevorzugten Vinylestern handelt es sich um solche der Formel (6)

CH₂ = CH - OCOR¹¹ (6)

worin
- R¹¹: C₁- bis C₃₀-Alkyl, vorzugsweise C₄- bis C₁₆-Alkyl, speziell C₆- bis C₁₂-Alkyl bedeutet.

Die Alkylreste können linear oder verzweigt sein. In einer bevorzugten Ausführungsform handelt es sich um lineare Alkylreste mit 1 bis 18 C-Atomen wie beispielsweise C₁- bis C₁₆-Alkyl oder C₁- bis C₁₂-Alkylreste. In einer weiteren bevorzugten Ausführungsform steht R¹¹ für einen verzweigten Alkylrest mit 3 bis 30 C-Atomen und bevorzugt mit 5 bis 16 C-Atomen wie beispielsweise mit 5 bis 30 oder 3 bis 16 C-Atomen. Besonders bevorzugte Vinylester leiten sich von sekundären und insbesondere tertiären Carbonsäuren ab, deren Verzweigung sich in alpha-Position zur Carbonylgruppe befindet. Speziell bevorzugt sind dabei die auch als Versaticsäurevinylester bezeichneten Vinylester tertiärer Carbonsäuren, die Neoalkylreste mit 5 bis 11 Kohlenstoffatomen, insbesondere mit 8, 9 oder 10 Kohlenstoffatomen besitzen. In einer weiteren Ausführungsform können die genannten Alkylgruppen mit einer oder mehreren Hydroxylgruppen substituiert sein Geeignete Vinylester umfassen Vinylacetat, Vinylpropionat, Vinylbutyrat, Vinylisobutyrat, Vinylhexanoat, Vinylheptanoat, Vinyloctanoat, Pivalinsäurevinylester, 2-Ethylhexansäurevinylester, Vinyllaurat, Vinylstearat sowie Versaticsäureester wie Neononansäurevinylester, Neodecansäurevinylester, Neoundecansäurevinylester. Insbesondere bevorzugt als Vinylester ist Vinylacetat.

In einer weiteren bevorzugten Ausführungsform enthalten die Ethylen-Copolymere B) Vinylacetat und mindestens einen weiteren Vinylester der Formel 6 worin R¹¹ für C₄- bis C₃₀-Alkyl, vorzugsweise C₄- bis C₁₆-Alkyl, speziell C₆- bis C₁₂-Alkyl wie beispielsweise C₄- bis C₁₂-Alkyl steht. Als weitere Vinylester sind dabei die oben beschriebenen Vinylester dieses Kettenlängenbereichs wie beispielsweise Vinylbutyrat, Vinylisobutyrat, Vinylhexanoat, Vinylheptanoat, Vinyloctanoat, Pivalinsäurevinylester, 2-Ethylhexansäurevinylester, Vinyllaurat, Vinylstearat sowie Versaticsäureester wie Neononansäurevinylester, Neodecansäurevinylester, Neoundecansäurevinylester bevorzugt.

Bei den für die Copolymerisation mit Ethylen bevorzugten Acrylsäure- und Methacrylsäureestern handelt es sich um solche der Formel (7)

CH₂ = CR¹² - COOR¹³ (7)

worin
- R¹²: Wasserstoff oder Methyl und
- R¹³: C₁- bis C₃₀-Alkyl, vorzugsweise C₄- bis C₁₆-Alkyl, speziell C₆- bis C₁₂-Alkyl bedeutet.

Die Alkylreste R¹³ können linear oder verzweigt sein. In einer bevorzugten Ausführungsform sind sie linear. In einer weiteren bevorzugten Ausführungsform besitzen sie eine Verzweigung an dem zur Estergruppierung benachbarten Kohlenstoffatom. Geeignete Acrylester umfassen z. B. Methyl(meth)acrylat, Ethyl(meth)acrylat, Propyl(meth)acrylat, n- und iso-Butyl(meth)acrylat, Hexyl-, Octyl-, 2-Ethylhexyl-, Decyl-, Dodecyl-, Tetradecyl-, Hexadecyl-, Octadecyl(meth)acrylat sowie Mischungen dieser Comonomere.

Bei den für die Copolymerisation mit Ethylen bevorzugten Alkylvinylethern handelt es sich um Verbindungen der Formel (8)

CH₂ = CH - OR¹⁴ (8)

worin
- R¹⁴: C₁- bis C₃₀-Alkyl, vorzugsweise C₄- bis C₁₆-Alkyl, speziell C₆- bis C₁₂-Alkyl bedeutet.

Die Alkylreste R¹⁴ können linear oder verzweigt sein. Beispielsweise seien genannt Methylvinylether, Ethylvinylether, iso-Butylvinylether.

Bei den für die Copolymerisation mit Ethylen bevorzugten Alkenen handelt es sich um einfach ungesättigte Kohlenwasserstoffe mit 3 bis 30 Kohlenstoffatomen, insbesondere 4 bis 16 Kohlenstoffatomen und speziell 5 bis 12 wie beispielsweise mit 3 bis 16 oder 3 bis 12 Kohlenstoffatomen. Geeignete Alkene umfassen Propen, Buten, Isobuten, Penten, Hexen, 4-Methylpenten-1, Hepten, Octen, Decen, Diisobutylen sowie Norbornen und seine Derivate wie Methylnorbornen und Vinylnorbornen. Besonders bevorzugt sind Propen, 4-Methylpenten-1 und Diisobutylen.

Die Alkylreste R¹¹, R¹³ und R¹⁴ können in untergeordneten Mengen funktionelle Gruppen wie beispielsweise Amino-, Amido-, Nitro-, Cyano-, Hydroxy-, Keto-, Carbonyl-, Carboxy-, Ester-, Sulfogruppen und/oder Halogenatome tragen, solange diese den Kohlenwasserstoffcharakter der genannten Reste nicht wesentlich beeinträchtigen. Besonders bevorzugt tragen die Alkylreste R¹¹, R¹³ und R¹⁴ unabhängig voneinander höchstens eine der genannten funktionellen Gruppen. In einer besonders bevorzugten Ausführungsform tragen die Alkylreste R¹¹, R¹³ und R¹⁴ jedoch keine basisch reagierenden und insbesondere keine stickstoffhaltigen funktionellen Gruppen.

Besonders bevorzugte Terpolymerisate enthalten außer Ethylen 3 bis 15 mol-%, insbesondere 5 bis 13 mol-% wie beispielsweise 3 bis 13 mol-% oder 3 bis 15 mol-% Vinylacetat und 0,1 bis 12 mol-%, insbesondere 0,2 bis 10 mol-% und speziell 0,5 bis 8 mol-% wie beispielsweise 0,1 bis 10 mol-%, 0,1 bis 8 mol-%, 0,2 bis 12 mol-%, 0,2 bis 8 mol-%, 0,5 bis 12 mol-% oder 0,5 bis 10 mol-% mindestens eines langkettigen Vinylesters, (Meth)acrylesters und/oder Alkens (Termonomer), wobei der gesamte Comonomergehalt zwischen 4 und 18 mol-%, bevorzugt zwischen 7 und 15 mol-% wie beispielsweise 4 bis 17 mol-%, 4 bis 14 mol-%, 7 bis 18 mol-%, 7 bis 14 mol-%, 8 bis 18 mol-% oder 8 bis 15 mol-% liegt. Besonders bevorzugte Termonomere sind dabei 2-Ethylhexansäurevinylester, Neononansäurevinylester, Neodecansäurevinylester, 2-Ethylhexylacrylat, 2-Propylheptylacrylat und 4-Methyl-2-propylhexylacrylat.

Weitere besonders bevorzugte Copolymere enthalten neben Ethylen und 3 bis 15 mol-%, insbesondere 5 bis 13 mol-% wie beispielsweise 3 bis 13 mol-% oder 5 bis 15 mol-% Vinylestern 0,1 bis 6 mol-%, bevorzugt 0,2 bis 5 mol-% wie beispielsweise 0,1 bis 5 mol-%, oder 0,2 bis 6 mol-% mindestens eines Olefins mit 3 bis 8 C-Atomen wie Propen, Buten, Isobuten, Hexen, 4-Methylpenten, Octen, Diisobutylen, Norbornen und/oder Styrol.

Beispiele für geeignete Terpolymere enthalten neben Ethylen zwei verschiedene Vinylester, zwei verschiedene Alkyl(meth)acrylate, einen Vinylester und ein Alkyl(meth)acrylat, einen Vinylester und ein Olefin oder ein Alkyl(meth)acrylat und ein Olefin.

Das zahlenmittlere Molekulargewicht der Ethylen-Copolymere B) liegt bevorzugt zwischen 100 und 100.000 und speziell zwischen 250 und 20.000 wie beispielsweise zwischen 100 und 20.000 oder zwischen 250 und 100.000 g/mol. Die gemäß DIN 53735 bei 190 °C und einer Auflagekraft von 2,16 kg gemessenen MFI190-Werte der Ethylen-Copolymere B) liegen bevorzugt zwischen 0,1 und 1.200 g/10 min und speziell zwischen 1 und 900 q/10 min wie beispielsweise zwischen 0,1 und 900 g/10 min oder zwischen 1 und 1.200 g/10 min . Die Mittels ¹H-NMR-Spektroskopie bestimmten Verzweigungsgrade liegen bevorzugt zwischen 1 und 9 CH₃/100 CH₂-Gruppen, insbesondere zwischen 2 und 6 CH₃/100 CH₂-Gruppen wie beispielsweise zwischen 1 und 6 CH₃/100 CH₂-Gruppen oder zwischen 2 und 9 CH₃/100 CH₂-Gruppen, die nicht aus den Comonomeren stammen.

Bevorzugt werden Mischungen aus zwei oder mehr der oben genannten Ethylen-Copolymere eingesetzt. Besonders bevorzugt unterscheiden sich die den Mischungen zugrunde liegenden Polymere in mindestens einem Charakteristikum. Beispielsweise können sie unterschiedliche Comonomere enthalten, unterschiedliche Comonomergehalte, Molekulargewichte und/oder Verzweigungsgrade aufweisen. In bevorzugten Mischungen hat jedes einzelne Ethylen-Copolymer einen Massenanteil von mindestens 5 Gew.-% bezogen auf die Gesamtmasse an B).

Die Herstellung der Copolymere B) erfolgt nach bekannten Verfahren (vgl. hierzu z. B. Ullmanns Encyclopädie der Technischen Chemie, 5. Auflage, Vol. A 21, Seiten 305 bis 413). Geeignet sind die Polymerisation in Lösung, in Suspension, in der Gasphase und die Hochdruckmassepolymerisation. Vorzugsweise wendet man die Hochdruckmassepolymerisation an, die bei Drücken von 50 bis 400 MPa, vorzugsweise 100 bis 300 MPa und Temperaturen von 50 bis 350 °C, vorzugsweise 100 bis 300 °C, durchgeführt wird. Die Reaktion der Comonomeren wird durch Radikale bildende Initiatoren (Radikalkettenstarter) eingeleitet. Zu dieser Substanzklasse gehören z. B. Sauerstoff, Hydroperoxide, Peroxide und Azoverbindungen wie beispielsweise Cumolhydroperoxid, t-Butylhydroperoxid, Dilauroylperoxid, Dibenzoylperoxid, Bis (2-ethylhexyl)-peroxidicarbonat, t-Butylpermaleinat, t-Butylperbenzoat, Dicumylperoxid, t-Butylcumylperoxid, Di-(t-butyl)peroxid, 2,2'-Azo-bis(2-methylpropanonitril), 2,2'-Azo-bis(2-methylbutyronitril). Die Initiatoren werden einzeln oder als Gemisch aus zwei oder mehr Substanzen in Mengen von 0,01 bis 20 Gew.-%, vorzugsweise 0,05 bis 10 Gew.-%, bezogen auf das Comonomerengemisch, eingesetzt.

Das gewünschte Molekulargewicht, üblicherweise gemessen über den Schmelzflussindex MFI (190 °C / 2,16 kg) der Copolymere B) wird bei gegebener Zusammensetzung des Comonomerengemisches durch Variation der Reaktionsparameter Druck und Temperatur und gegebenenfalls durch Zusatz von Moderatoren eingestellt. Als Moderatoren haben sich Wasserstoff, gesättigte oder ungesättigte Kohlenwasserstoffe, wie beispielsweise Propan und Propen, Aldehyde, wie beispielsweise Propionaldehyd, n-Butyraldehyd und Isobutyraldehyd, Ketone, wie beispielsweise Aceton, Methylethylketon, Methylisobutylketon und Cyclohexanon oder Alkohole wie beispielsweise Butanol, bewährt. In Abhängigkeit von der angestrebten Viskosität werden die Moderatoren in Mengen von bis zu 20 Gew.-%, vorzugsweise von 0,05 bis 10 Gew.-%, bezogen auf das Comonomerengemisch, angewandt.

Die Hochdruckmassepolymerisation wird in bekannten Hochdruckreaktoren, z. B. Autoklaven oder Rohrreaktoren diskontinuierlich oder kontinuierlich durchgeführt, besonders bewährt haben sich Rohrreaktoren. Lösungsmittel wie aliphatische Kohlenwasserstoffe oder Kohlenwasserstoffgemische, Toluol oder Xylol, können im Reaktionsgemisch enthalten sein, wenngleich sich die lösungsmittelfreie Arbeitsweise besonders bewährt hat. Nach einer bevorzugten Ausführungsform der Polymerisation wird das Gemisch aus den Comonomeren, dem Initiator und, sofern eingesetzt, dem Moderator, einem Rohrreaktor über den Reaktoreingang sowie über einen oder mehrere Seitenäste zugeführt. Hierbei können die Comonomerenströme unterschiedlich zusammengesetzt sein (EP-B-0 271 738).

Die erfindungsgemäßen Polymerzusammensetzungen sind erhältlich durch radikalische Copolymerisation der Monomere A) in Gegenwart der Ethylen-Copolymere B). Die Durchführung radikalischer Polymerisationen ist dem Fachmann grundsätzlich bekannt.

Die radikalische Polymerisation kann beispielsweise als Massepolymerisation erfolgen, indem die Mischung der Alkyl(meth)acrylate A) mit dem Ethylen-Copolymer B) durch Zugabe eines Radikalkettenstarters polymerisiert wird. Auf Grund der Viskosität der Ethylen-Copolymere erfolgt die Massepolymerisation bevorzugt bei Temperaturen oberhalb des Schmelzpunkts des Ethylen-Copolymers B) wie beispielsweise oberhalb 60 °C, speziell oberhalb 80 °C und insbesondere zwischen 90 und 150 °C.

In einer bevorzugten Ausführungsform der Erfindung erfolgt die Herstellung der erfindungsgemäßen Polymerzusammensetzung mittels radikalischer Polymerisation in Lösung (Lösungspolymerisation). Es sind hierfür prinzipiell alle Lösungsmittel geeignet, in denen die Monomere A), die Ethylen-Vinylacetat-Copolymere B) sowie die gebildete Polymerzusammensetzung bei der für die Polymerisation vorgesehenen Temperatur, auch in der gewünschten hohen Konzentration ausreichend löslich bzw. zumindest homogen dispergiert vorliegen. Weiterhin sollen sie im Zuge der Polymerisation keine unerwünschten Reaktionen eingehen. Geeignete Lösemittel sollten insbesondere nicht selbst polymerisierbar sein und unter den gewählten Polymerisationsbedingungen eine möglichst geringe moderierende / kettenübertragende Wirkung haben.

Bei der Lösungspolymerisation beträgt die Menge an Lösemittel üblicherweise das 0,1- bis 10-fache, bevorzugt das 0,5- bis 5-fache der Gesamtmenge an A) und B). Besonders bevorzugt liegt der Anteil des Lösemittels an der Gesamtmenge aus A), B) und Lösemittel sowie gegebenenfalls anwesenden weiteren Hilfsstoffen zwischen 35 und 80 Gew.-% und speziell zwischen 40 und 70 Gew.-% wie beispielsweise zwischen 35 und 70 Gew.-% oder zwischen 40 und 80 Gew.-%.

Bevorzugt handelt es sich bei den für die Lösungspolymerisation geeigneten Lösemitteln um Kohlenwasserstoffe, bevorzugt um aliphatische, cycloaliphatische und/oder aromatische Kohlenwasserstoffe und deren Gemische. Beispiele für geeignete Lösemittel sind Toluol, Xylol, höhere Aromaten sowie höhersiedende Aromatengemische und/oder isoaliphatische Lösemittel bzw. Lösemittelgemische. Bei der Lösungspolymerisation wird eine gebrauchsfertige, Lösemittel enthaltende, Polymerzusammensetzung erhalten, welche direkt oder auch nach Verdünnung mit weiterem Lösemittel als Pour-Point-Depressant verwendet werden kann, ohne dass weitere Aufarbeitungsschritte nach der Polymerisation erforderlich sind.

Für die Lösungspolymerisation wird in einer bevorzugten Ausführungsform zunächst eine Lösung der verwendeten Alkyl(meth)acrylate Ai), Aii) und optional weiterer Monomere Aiii) sowie des Copolymers (B) im gewählten Lösemittel hergestellt. Das Lösen erfolgt durch intensives Vermischen der Komponenten, beispielsweise durch Rühren. Man kann beispielsweise zunächst die Monomere (A) lösen und dann der Lösung festes Ethylen-Vinylester-Copolymer (B) zugeben oder man kann zunächst Ethylen-Vinylester-Copolymer (B) lösen und die Monomere (A) zugeben. Das Lösen kann durch eine Erhöhung der Temperatur, beispielsweise auf ca. 50 bis 80 °C beschleunigt werden.

In einer besonders bevorzugten Ausführungsform wird eine Lösung der Alkyl(meth)acrylate Ai) und Aii) und optional weiterer Monomere Aiii) in einem auch für die spätere Polymerisation geeigneten, wie oben beschriebenen Lösemittel hergestellt, indem man (Meth)acrylsäure mit Alkoholen der Formel R³-OH und R⁴R⁵CH-CH₂-OH in diesem Lösemittel verestert und die erhaltene Lösung nach Mischung mit dem Ethylen-Copolymer B) zur Polymerisation einsetzt. Die Veresterung kann nach dem Fachmann prinzipiell bekannten Methoden durchgeführt werden. Estermonomere der Formel (3) können gemeinsam mit den Monomeren Ai) und Aii) und optional weiterer Monomere Aiii) hergestellt werden, indem ein Alkohol der Formel R⁶-OH zusammen mit den Alkoholen der Formeln R³-OH und R⁴R⁵CH-CH₂-OH mit (Meth)acrylsäure verestert wird. Sie können auch separat hergestellt und dann dem Polymerisationsansatz zugefügt werden.

In einer weiteren besonders bevorzugten Ausführungsform erfolgen die Herstellung der Alkyl(meth)acrylate Ai) und Aii) und optional weiterer Monomere Aiii) sowie deren anschließende Polymerisation in Gegenwart des Ethylen-Copolymers B) in einem aliphatischen Kohlenwasserstoff oder Kohlenwasserstoffgemisch mit geringer moderierender Wirkung wie beispielsweise einem isoparaffinischen Lösemittel oder Lösemittelgemisch mit einem Siedebeginn oberhalb 150 °C und speziell oberhalb 180 °C und einem Flammpunkt von mindestens 60 °C. Somit werden Transport und Lagerung der Polymerzusammensetzungen vereinfacht.

Die radikalische Polymerisation erfolgt unter Verwendung von thermisch zerfallenden Initiatoren für die radikalische Polymerisation. Auch wenn üblicherweise nur ein Initiator eingesetzt wird hat es sich in verschiedenen Fällen bewährt, ein Gemisch aus zwei oder mehr verschiedenen Initiatoren zum Beispiel mit unterschiedlichen Halbwertszeiten einzusetzen. Bevorzugt werden die eingesetzten Initiatoren so gewählt, dass sie im Polymerisationsmedium löslich sind. Bevorzugte Polymerisationsinitiatoren umfassen öllösliche Peroxide und Azoverbindungen, insbesondere solche mit einer 10 h-Halbwertszeit von weniger als 70 °C und bevorzugt weniger als 50 °C. Derartige Initiatoren sind prinzipiell bekannt und kommerziell erhältlich. Bezogen auf die Monomere A) werden sie bevorzugt in Mengen von 0,1 bis 2,0 Gew.-% wie beispielsweise in Mengen von 0,2 bis 1,5 Gew.-% eingesetzt.

Weiterhin können in prinzipiell bekannter Art und Weise Molekulargewichtsregler zugegeben werden. Beispiele für Regler umfassen Alkohole wie Isopropanol, Allylalkohol oder Buten-2-ol, Thiole wie Ethanthiol oder Dodecanthiol oder Aldehyde wie Crotonaldehyd. Die Menge der Molekulargewichtsregler beträgt in der Regel 1 bis 4 Gew.-%, bevorzugt 1,5 bis 3 Gew.-% bezogen auf die Gesamtmenge der Monomere A).

Die radikalische Polymerisation wird in prinzipiell bekannter Art und Weise durch Erwärmen des Reaktionsansatzes ausgelöst. Die Polymerisationstemperatur sollte oberhalb der 10 h-Halbwertszeit des Initiators liegen und beträgt in der Regel mindestens 50 °C. Besonders bewährt hat sich eine Polymerisationstemperatur von 50 bis 120 °C, insbesondere 55 bis 100 °C. In der Regel wird die Polymerisation in prinzipiell bekannter Art und Weise unter einem Schutzgas wie beispielsweise Stickstoff vorgenommen. Die Polymerisation in Lösung kann vorgenommen werden, indem man die Lösung der Ausgangsstoffe in einem geeigneten, bevorzugt gerührten Reaktionsgefäß vorlegt. Zur Lösung gibt man falls gewünscht einen oder mehrere Molekulargewichtsregler. Nach dem Erreichen der gewünschten Polymerisationstemperatur gibt man eine Lösung des Initiators zu dem zu polymerisierenden Gemisch. Dabei kann die Gesamtmenge des Initiators zu Beginn der Polymerisation zugesetzt werden, bevorzugt gibt man aber den Initiator über einen Zeitraum von 10 Minuten bis 5 Stunden, bevorzugt 30 Minuten bis 2 Stunden zu. Die Zugabe kann in definierten Portionen oder kontinuierlich erfolgen. Nach der vollständigen Zugabe des Initiators sollte sich im Regelfalle noch eine Nachpolymerisationszeit anschließen. Diese kann beispielsweise 0,5 bis 5 h betragen.

Das Mengenverhältnis von Monomeren A) zu Ethylen-Vinylester-Copolymeren B) wird je nach den gewünschten Eigenschaften der zu synthetisierenden Polymerzusammensetzung gewählt, wobei der Anteil der Monomere A) 40 bis 95 Gew.-%, bevorzugt 50 bis 90 Gew.-%, besonders bevorzugt 60 bis 80 Gew.-% wie beispielsweise 40 bis 90 Gew.-%, 40 bis 80 Gew.-%, 50 bis 95 Gew.-%, 50 bis 80 Gew.-%, 60 bis 95 Gew.-% oder 60 bis 90 Gew.-% und die Menge an Ethylen-Copolymeren B) 5 bis 60 Gew.-%, bevorzugt 10 bis 50 Gew.-% und besonders bevorzugt 20 bis 40 Gew.-% wie beispielsweise 50 bis 50 Gew.-%, 5 bis 40 Gew.-%, 10 bis 60 Gew.-%, 10 bis 40 Gew.-%, 20 bis 60 Gew.-% oder 20 bis 50 Gew.-%, jeweils bezogen auf die Summe aus Alkyl(meth)acrylaten A) und Ethylen-Vinylester-Copolymeren B) beträgt. In einer speziellen Ausführungsform addieren sich die Mengen an A) und B) zu 100 Gew.-%. Die oben angegebenen Mengen an A und B, die die erfindungsgemäße Zusammensetzung ergeben, verstehen sich in Substanz, also ohne Lösemittel.

Die erfindungsgemäßen Polymerzusammensetzungen sind insbesondere zur Verbesserung der Kälteeigenschaften von Rohölen und daraus hergestellten paraffinhaltigen Produkten wie beispielsweise Mitteldestillaten, Heizölen, Bunkerölen und Rückstandsölen geeignet. Besonders vorteilhafte Wirkung haben sie auf Roh- und Rückstandsöle. Sie modifizieren die Struktur der bei niedrigen Temperaturen ausfallenden Paraffine, wodurch der Pour Point der Rohöle wie auch der daraus hergestellten Produkte abgesenkt wird. Dazu werden dem zu behandelnden Rohöl bzw. den daraus abgeleiteten, paraffinhaltigen Produkten die erfindungsgemäßen Polymerzusammensetzungen zugesetzt. Die erfindungsgemäßen Polymere können selbstverständlich auch zu anderen Zwecken verwendet werden.

Die Verwendung der Polymerzusammensetzungen als Mineralöladditiv erfolgt, indem man dem Rohöl bzw. dem daraus hergestellten paraffinhaltigen Produkt mindestens eine der Polymerzusammensetzungen zusetzt. Übliche Zusatzmengen betragen 10 bis 10.000 Gew.-ppm, bevorzugt 50 bis 2.000 Gew.-ppm wie beispielsweise 10 bis 2.000 Gew.-ppm oder 50 bis 10.000 Gew.-ppm der Polymerzusammensetzung.

Zur erfindungsgemäßen Verwendung kann die Polymerzusammensetzung als solche eingesetzt werden. Vorteilhafterweise werden die erfindungsgemäßen Polymerzusammensetzungen als Konzentrate in organischen Lösemitteln eingesetzt. Neben dem bei der Lösungspolymerisation direkt anfallenden Konzentrat kann die Polymerzusammensetzung auch nach ihrer Herstellung mit weiterem Lösemittel abgeschwächt werden. Dabei soll die Polymerzusammensetzung homogen dispergiert, bevorzugt gelöst vorliegen. Es sind prinzipiell alle Lösemittel geeignet, die diese Anforderungen erfüllen. Auch Gemische verschiedener Lösemittel können eingesetzt werden.

Bevorzugte Lösemittel für die Herstellung von Konzentraten der erfindungsgemäßen Polymerzusammensetzungen sind neben den für die Lösungspolymerisation einsetzbaren, oben beschriebenen Lösemitteln insbesondere aliphatische, cycloaliphatische und/oder aromatische Kohlenwasserstoffe und Kohlenwasserstoffgemische. Insbesondere bevorzugt sind Lösemittel mit einem Flammpunkt oberhalb 60 °C, da bei Verwendung derartiger Lösemittel für Transport und Lagerung der Konzentrate weniger Beschränkungen zu beachten sind.

Geeignete Lösemittel bzw. Lösemittelgemische sind beispielsweise gesättigte aliphatische Kohlenwasserstoffe. Dabei kann es sich sowohl um paraffinische als auch um naphthenische, also gesättigte zyklische Kohlenwasserstoffe handeln. Bevorzugt handelt es sich um hochsiedende aliphatische Kohlenwasserstoffe mit einem Siedepunkt von mindestens 175 °C und bevorzugt einem Flammpunkt oberhalb 60 °C. Geeignete Kohlenwasserstoffe mit einem Flammpunkt oberhalb 60 °C umfassen beispielsweise n-Undecan (Flammpunkt 60 °C, Siedepunkt 196 °C) oder n-Dodecan (Flammpunkt 71 °C, Siedepunkt 216 °C). Bevorzugt werden technische Gemische von Kohlenwasserstoffen eingesetzt, beispielsweise Gemische paraffinischer Kohlenwasserstoffe, Gemische paraffinischer und naphtenischer Kohlenwasserstoffe oder Gemische von Isoparaffinen. Für den Fachmann ist klar, dass technische Gemische noch untergeordnete Anteile an aromatischen oder ungesättigten Kohlenwasserstoffen enthalten können. Der Gehalt an aromatischen und/oder ungesättigten Kohlenwasserstoffen liegt bevorzugt unter 20 Gew.-%, oftmals unter 10 Gew.-% und teilweise unter 1 Gew.-%. Technische Gemische gesättigter aliphatischer Lösemittel sind kommerziell erhältlich, beispielsweise technische Gemische der Shellsol® D-Reihe, der lsopar®-Reihe oder der Exxsol® D-Reihe. Auch Kerosin ist als aliphatisches Kohlenwasserstoffgemisch geeignet.

Bei den zur Herstellung von Konzentraten geeigneten Kohlenwasserstoffen kann es sich weiterhin um aromatische Lösemittel bzw. Lösemittelgemische handeln. In einer Ausführungsform der Erfindung handelt es sich um hochsiedende aromatische Kohlenwasserstoffe mit einem Siedepunkt von mindestens 175 °C und bevorzugt einem Flammpunkt oberhalb 60 °C. Geeignete aromatische Kohlenwasserstoffe mit einem Flammpunkt oberhalb 60 °C umfassen beispielsweise alkylierte Aromaten und Naphthalin. Bevorzugt werden technische Gemische von aromatischen Kohlenwasserstoffen eingesetzt. Technische Gemische aromatischer Lösemittel sind kommerziell erhältlich, beispielsweise technische Gemische der Shellsol® A-Reihe oder der Solvesso®-Reihe.

Weitere Beispiele für geeignete Lösemittel sind gesättigte aliphatische Kohlenwasserstoffe, gesättigte aliphatische Alkohole und Ester aus gesättigten aliphatischen Carbonsäuren und gesättigten aliphatischen Alkoholen. Beispiele für geeignete Alkohole umfassen aliphatische Alkohole mit mindestens acht Kohlenstoffatomen wie 1-Octanol, 2-Ethylhexanol, 1-Decanol, 1-Dodecanol und Isotridecanol. Beispiele für geeignete Ester umfassen Ester gesättigter Fettsäuren mit mindestens acht Kohlenstoffatomen mit gesättigten aliphatischen Alkoholen, wie beispielsweise Laurinsäuremethylester oder Stearinsäuremethylester.

Technische Gemische verschiedener aliphatischer Ester sind kommerziell erhältlich. In einer weiteren Ausführungsform der Erfindung können Ester aliphatischer oder cycloaliphatischer Dicarbonsäuren eingesetzt werden, wie beispielsweise Dialkylester von Cyclohexan-1,2-dicarbonsäure wie Cyclohexan-1,2-dicarbonsäure-diisononylester. Besonders bevorzugte Lösemittel weisen einen Flammpunkt oberhalb 60 °C auf.

Die Konzentration der Polymerzusammensetzung im Konzentrat wird vom Fachmann entsprechend den gewünschten Eigenschaften der herzustellenden Formulierung gewählt. Bevorzugte Konzentrate besitzen einen Gehalt an erfindungsgemäßer Polymerzusammensetzung von 20 bis 60 Gew.-%, besonders bevorzugt 25 bis 50 Gew.-% und speziell 25 bis 40 Gew.-% wie beispielsweise 20 bis 50 Gew.-%, 20 bis 40 Gew.-% oder 25 bis 60 Gew.-%, bezogen auf die Summe aus Polymerzusammensetzung und dem verwendeten Lösemittel. Derartige Formulierungen zeichnen sich durch einen sehr niedrigen Eigenstockpunkt und damit eine vereinfachte Handhabung bei niedrigen Lager-und Transporttemperaturen aus. Geeignete Konzentrate können direkt mittels des oben genannten Verfahrens der Lösungspolymerisation hergestellt werden. Oftmals hat es sich bewährt, die Polymerisation lösemittelfrei oder die Lösungspolymerisation bei einer höheren Konzentration durchzuführen und anschließend mit weiterem Lösemittel, bevorzugt mit den oben beschriebenen aliphatischen und/oder aromatischen Kohlenwasserstoffen zu verdünnen. Auch können die erfindungsgemäßen Polymerzusammensetzungen zusammen mit weiteren Wirkstoffen für den gleichen oder andere Zwecke formuliert werden.

Die verzweigten Alkohole Aii) verleihen den erfindungsgemäßen Polymerzusammensetzungen und insbesondere deren Konzentraten überraschend niedrige Eigenstockpunkte, ohne dass die Wirksamkeit als Pour Point Depressant (Stockpunkterniedriger) übermäßig beeinträchtigt wird, wie es gemäß Lehre der WO 2010/003892 zu erwarten war. Dies erlaubt ihren Einsatz auch bei niedrigen Temperaturen von beispielsweise unterhalb 10 °C, oftmals unterhalb 5 °C und teilweise unterhalb 0 °C ohne Heizen von Vorratsbehälter und/oder Leitungen. Auch bleiben die flüssigen, niedrig viskosen Konzentrate über längere Zeiträume wie beispielsweise über mehrere Tage bis mehrere Wochen hinweg homogen, das heißt es findet keine für Mischungen aus Poly(alkyl(meth)acrylaten) und Ethylen-Copolymeren typische Phasenseparation oder Vergelung statt. Dies ist vermutlich auf eine zumindest teilweise Pfropfung der Alkyl(meth)acrylate Ai) und Aii) auf das Ethylen-Copolymer B) zurückzuführen.

Die erfindungsgemäßen Polymerzusammensetzungen und insbesondere ihre Konzentrate in Kohlenwasserstoffen sind trotz eines hohen Wirkstoffgehalts von bis zu 50 Gew.-% niedrig viskose Flüssigkeiten. Ihre Viskositäten bei 20 °C liegen unterhalb 1 Pas. Ihr Eigenstockpunkt liegt üblicherweise unter 10 °C, oftmals auch unterhalb 0 °C wie beispielsweise unterhalb -10 °C. Sie lassen sich somit auch unter ungünstigen klimatischen Bedingungen wie beispielsweise in arktischen Gebieten wie auch bei off-shore-Anwendungen ohne weitere Vorkehrungen gegen das Stocken der Additive einsetzen. Auch eine Applikation down-the-hole ist ohne vorheriges Verdünnen der Additive und ohne Beheizen der Förderleitungen möglich. Darüber hinaus zeigen sie auch bei erhöhten Temperaturen von über 30 °C wie beispielsweise über 45 °C eine hervorragende Langzeitstabilität, das heißt auch nach mehrwöchiger und teilweise mehrmonatiger Lagerung zeigen die erfindungsgemäßen Suspensionen keine oder nur vernachlässigbare Mengen an Koagulat bzw. abgesetztem Lösemittel. Eventuell auftretende Inhomogenitäten können zudem durch einfaches Aufrühren wieder homogenisiert werden.

Neben dem Einsatz der erfindungsgemäßen Polymerzusammensetzungen als solche oder als Konzentrat können sie auch mit weiteren Komponenten formuliert werden. Beispielsweise kann man der Formulierung zusätzliche, sich in ihrer chemischen Natur von den erfindungsgemäßen Polymerzusammensetzungen unterscheidende Wachs-Dispergatoren zusetzen, die gebildete Paraffin-Kristalle stabilisieren und verhindern, dass diese sedimentieren. Als Wachsdispergatoren können beispielsweise Alkylphenole, Alkylphenol-Formaldehyd-Harze und/oder Dodecylbenzolsulfonsäure eingesetzt werden. Weiterhin können die erfindungsgemäßen Polymerzusammensetzungen zusammen mit Asphaltendispergatoren eingesetzt werden, die eine Ausfällung von polyzyklischen Kohlenwasserstoffen verhindern.

Die Polymerzusammensetzungen zeigen im beanspruchten Bereich sowohl einen niedrigen Eigenstockpunkt als auch eine sehr gute Absenkung des Pour Points von paraffinhaltigen Mineralölen. Dies war insbesondere in Anbetracht der Lehre der WO 2010/003892 nicht zu erwarten, da dort die verzweigten Alkohole keine anwendungstechnische Wirksamkeit zeigen.

### Beispiele

### Herstellung der Polymere

Die erfindungsgemäßen Polymerzusammensetzungen wie auch die Vergleichsbeispiele wurden hergestellt durch Veresterung einer Mischung aus linearem Alkohol und verzweigtem Alkohol mit Acrylsäure bzw. Methacrylsäure in Xylol unter azeotropem Entfernen von Reaktionswasser. Anschließend wurde das EVA-Copolymer unter Zugabe weiteren Lösemittels (Xylol) im Acrylat gelöst so dass eine insgesamt 60 Gew.-%ige Lösung entstand. Nach Inertisieren mit Stickstoff wurde mit 2,2'-Azobis-2-methylbutyronitril (AMBN) bei 80 °C radikalisch polymerisiert. In Tabelle 1 sind die für die Herstellung der verschiedenen Polymerzusammensetzungen eingesetzten Rohstoffe aufgelistet.

**Tabelle 1: Für die Herstellung der Polymerzusammensetzungen eingesetzte Rohstoffe**

| | |
|---|---|
| EVA 1 | Ethylen-Vinylacetat-Copolymer aus 72 Gew.-% Ethylen und 28 Gew.-% Vinylacetat; Schmelzflussindex MFI (@190 °C/2,16 kg) von 8 g/10 min. |
| EVA 2 | Ethylen-Vinylacetat-Copolymer aus 81 Gew.-% Ethylen und 19 Gew.-% Vinylacetat; Schmelzflussindex MFI (@190 °C/2,16 kg) von 12 g/10 min. |
| EVA 3 | Terpolymer aus 69 Gew.-% Ethylen; 16 Gew.-% Vinylacetat und 15 Gew.-% 2-Ethylhexylacrylat; Schmelzflussindex MFI (@190 °C/2,16 kg) von 32 g/10 min. |
| BA 1 | Behenylacrylat: Technische Mischung aus 39 Gew.-% C₁₈-, 13 Gew.-% C₂₀-und 48 Gew.-% C₂₂-Acrylaten mit linearem Alkylrest |
| BA 2 | Behenylacrylat: Technische Mischung aus 43 Gew.-% C₁₈-, 11 Gew.-% C₂₀-und 44 Gew.-% C₂₂-Acrylaten mit linearem Alkylrest |
| BA 3 | Behenylmethacrylat: Technische Mischung aus 48 Gew.-% C₁₈-, 9 Gew.-% C₂₀-und 43 Gew.-% C₂₂-Acrylaten mit linearem Alkylrest |
| GA 1 | 2-Dodecyl-hexadecylacrylat |
| GA 2 | 2-Octyl-dodecylacrylat |
| GA 3 | 2-Tetradecyl-octadecylacrylat |
| tBA | tert.-Butylacrylat |
| IDTA | iso-Tridecylacrylat |
| OA | Oleylacrylat |
| 2-EHA | 2-Ethylhexylacrylat |

### Beispiel 1: Herstellung eines Copolymers aus Behenylacrylat und 2-Dodecyl-hexadecylacrylat (1:1) in Gegenwart von EVA 1

In einem Polymerisationsgefäß mit Teflonrührer, Intensivkühler, Thermometer, Gaseinlassrohr und Tropftrichter wurden 182,9 g Behenylacrylat (BA 1) und 237,7 g 2-Dodecyl-hexadecylacrylat (GA 1) in 188 g Xylol bei 90 °C gelöst. Unter Rühren wurden 141,6 g des Ethylen-Vinylacetat-Copolymers EVA 1 und weitere 108,1 g Xylol zugegeben bis eine homogene Lösung vorlag. Bei 70 °C wurden 1,78 g des Initiators 2,2'-Azobis(2-methylbutyronitril) (Peroxan AIVN) gelöst in 80,0 g Xylol über 1 Stunde zudosiert. Nach weiteren 4 Stunden Reaktionszeit bei 70 °C wurde zur Zerstörung von Initiatorresten eine Stunde bei 90 °C nachgerührt.

Die erhaltene Lösung wies eine Konzentration von 60 Gew.-% der Polymerzusammensetzung auf. Zur Beurteilung der Fließfähigkeit wurde das Reaktionsprodukt mit Solvent Naphtha, einem hochsiedenden aromatischen Kohlenwasserstoffgemisch mit Siedebereich von 185 bis 215 °C auf einen Polymergehalt von 35 Gew.-% verdünnt und bei 90 °C homogenisiert. An dieser Einstellung wurden die dynamische Viskosität bei 40 °C gemäß DIN ISO 3219 und der Eigenstockpunkt des Produkts gemäß DIN ISO 3016 bestimmt. Die ermittelten Werte sind in Tabelle 2 wiedergegeben.

Die weiteren Beispiele sowie die Vergleichsbeispiele wurden gemäß der gleichen Vorschrift mit den in Tabelle 2 aufgeführten Rohstoffen und Mengenverhältnissen durchgeführt. Prozentangaben beziehen sich, sofern nicht anders angegeben, auf Gewichtsanteile.

**Tabelle 2: Charakterisierung der eingesetzten Polymerzusammensetzungen**

| Polymer | EVA (B) | Acrylat gesamt | Acrylat, Zusammensetzung | | | Visk.@40 °C | Pour Point |
|---|---|---|---|---|---|---|---|
| | [Gew.-%] | [Gew.-%] | linear (Ai) [mol-%] | 2-verzweigt (Aii) [mol-%] | weitere (Aiii) [mol-%] | [mPas] | [°C] |
| P1 | 25 % EVA1 | 75% | 50 % BA 1 | 50 % GA1 | - | 167 | -9 |
| P2 | 25 % EVA1 | 75 % | 70 % BA 1 | 30 % GA1 | - | 207 | 6 |
| P3 | 25 % EVA1 | 75% | 90 % BA 1 | 10 % GA1 | - | 288 | 21 |
| P4 | 25 % EVA1 | 75% | 25 % BA 1 | 75 % GA1 | - | 131 | -27 |
| P5 | 25 % EVA1 | 75% | 50 % BA 1 | 50 % GA2 | - | 172 | -6 |
| P6 | 25 % EVA1 | 75% | 50 % BA 1 | 50 % GA3 | - | 161 | -3 |
| P7 | 25 % EVA1 | 75% | 50 % BA 1 | 25 % GA1 | 25 % OA | 169 | -6 |
| P8 | 25 % EVA1 | 75% | 50 % BA 1 | 25 % GA1 | 25 % ITDA | 167 | -3 |
| P9 | 25 % EVA1 | 75% | 45 % BA 1 | 25 % GA1 | 30 % ITDA | 158 | -9 |
| P10 | 25 % EVA1 | 75% | 50 % BA 1 | 25 % GA1 | 25 % tBA | 145 | -3 |
| P11 | 20 % EVA1 | 80% | 45 % BA 1 | 25 % GA 1 | 30 % ITDA | 125 | -6 |
| P12 | 25 % EVA1 | 75% | 34 % BA 2 | 33 % GA 1 | 33 % OA | 99 | -18 |
| P13 | 25 % EVA1 | 75% | 50 % BA 2 | 25 % GA 1 | 25 % OA | 124 | -6 |
| P14 | 25 % EVA1 | 75% | 50 % BA 2 | 25 % GA 1 | 25 % ITDA | 112 | -6 |
| P15 | 25 % EVA1 | 75% | 45 % BA 2 | 25 % GA 1 | 30 % ITDA | 227 | -9 |
| P16 | 35 % EVA1 | 65 % | 50 % BA 2 | 25 % GA 1 | 25 % OA | 391 | 0 |
| P17 | 25 % EVA1 | 75% | 45 % BA 2 | 25 % GA 1 | 30 % ITDA | 187 | -12 |
| P18 | 25 % EVA1 | 75% | 50 % BA 2 | 50 % GA 1 | - | 157 | -9 |
| P19 | 25 % EVA1 | 75% | 50 % BA 3 | 50 % GA3 | - | 620 | -12 |
| P20 | 25 % EVA2 | 75% | 50% BA 1 | 50% GA 1 | | 234 | -3 |
| P21 | 20 % EVA3 | 80% | 50 % BA 3 | 50 % GA3 | | 187 | -9 |
| Vgl. 1 | 25 % EVA1 | 75% | 100 % BA 1 | - | - | 206 | 24 |
| Vgl. 2 | 20 % EVA1 | 80 % | 100 % BA 2 | - | - | 132 | 27 |
| Vgl. 3 | 25 % EVA1 | 75% | 50 % BA 1 | - | 50 % tBA | 106 | -6 |
| Vgl. 4 | 20 % EVA1 | 80 % | 45 % BA 1 | - | 55 % ITDA | 118 | -12 |
| Vgl. 5 | 25 % EVA1 | 75% | 70 % BA 1 | - | 30 % 2-EHA | 232 | 12 |
| Vgl. 6 | 25 % EVA1 | 75% | 100 % BA 3 | - | - | 666 | 0 |
| Vgl. 7 | 25 % EVA1 | 75% | - | 100 % GA1 | - | 94 | -39 |

Für die Bestimmung ihrer Wirksamkeit wurden die Polymerzusammensetzungen Rohölen bzw. Rückstandsölen zugesetzt und die dadurch erzielte Stockpunktabsenkung (Pour Point gemäß ASTM D97) des Öls bestimmt. Bei den Testölen O1, O2 und O4 handelte es sich um Rohöle westafrikanischer, bei O3 um ein Rohöl nordafrikanischer Provenienz. Bei Testöl 5 handelte es sich um einen Rückstand der Rohöldestillation. Die Charakterisierung der verwendeten Rohöle ist in Tabelle 3 wiedergegeben. Die Zusammensetzung der Öle wurde mittels SARA-Analyse gemäß IP 469-01 vorgenommen. Dabei wurden die Anteile der Rohöle an gesättigten Kohlenwasserstoffen (Sat.), Aromaten (Arom.), Harzen (Res.) und Asphaltenen (Asph.) bestimmt. Die Bestimmung der Wax Appearance Temperature (WAT) erfolgte mittels Dynamischer Differernzkalorimetrie (DSC). Die Starttemperatur der Messungen wurde dabei so gewählt, dass sie mindestens 10 °C oberhalb der WAT lag. Die Proben wurden mit einer Kühlrate von -2,5 K/min abgekühlt. Der Beginn der exothermen Paraffinkristallisation zeigt die WAT an. Die in den Rohölen O1 bis O4 erzielten Stockpunktabsenkungen sind in den Tabellen 4 bis 7 wiedergegeben.

**Tabelle 3: Charakterisierung der Testöle O1 bis O5**

| Testöl | Pour Point (blank) [°C] | SARA-Analyse | | | | WAT [°C] |
|---|---|---|---|---|---|---|
| | | Sat. [%] | Arom. [%] | Res. [%] | Asph [%] | |
| O1 | 15 | 53 | 22 | 24 | 1 | 30 |
| O2 | 15 | 50 | 24 | 25 | 1 | 24 |
| O3 | 30 | 71 | 18 | 5 | 6 | 36 |
| O4 | 12 | 60 | 29 | 10 | 1 | 20 |
| O5 | 18 | 29 | 50 | 13 | 8 | 16 |

**Tabelle 4: Pour Point-Absenkung in Testöl O1; blank PP +15 °C**

| Beispiel | Polymer | 100 ppm |
|---|---|---|
| 1 | P1 | -3 |
| 2 | P2 | -6 |
| 3 | P3 | -6 |
| 4 | P4 | 9 |
| 5 | P5 | 0 |
| 6 | P6 | -6 |
| 7 | P7 | 0 |
| 8 | P8 | -3 |
| 9 | P9 | -3 |
| 10 | P10 | -3 |
| 11 | P11 | 6 |
| 12 | P12 | 9 |
| 13 | P13 | 6 |
| 14 | P14 | 0 |
| 15 | P15 | 0 |
| 16 | P16 | -3 |
| 17 | P17 | 0 |
| 18 | P18 | 0 |
| 19 | P19 | -6 |
| 20 (V) | Vgl. 1 | -6 |
| 21 (V) | Vgl. 2 | -3 |
| 22 (V) | Vgl. 3 | 6 |
| 23 (V) | Vgl. 4 | 6 |
| 24 (V) | Vgl. 5 | 0 |
| 25 (V) | Vgl. 6 | -6 |
| 26 (V) | Vgl. 7 | 15 |

**Tabelle 5: Pour Point-Absenkung in Testöl O2; blank PP +15**

| Beispiel | Polymer | 100 ppm |
|---|---|---|
| 27 | P1 | -15 |
| 28 | P2 | -18 |
| 29 | P3 | -12 |
| 30 | P4 | -6 |
| 31 | P5 | -15 |
| 32 | P6 | -15 |
| 33 | P9 | -18 |
| 34 | P13 | -15 |
| 35 | P14 | -12 |
| 36 | P15 | -12 |
| 37 | P16 | -21 |
| 38 | P17 | -15 |
| 39 | P18 | -18 |
| 40 | P19 | -18 |
| 41 | P20 | -18 |
| 42 (V) | Vgl. 1 | -24 |
| 43 (V) | Vgl. 2 | -21 |
| 44 (V) | Vgl. 6 | -21 |

**Tabelle 6: Pour Point-Absenkung in Testöl O3; blank PP +30**

| Beispiel | Polymer | 1.000 ppm |
|---|---|---|
| 45 | P1 | 15 |
| 46 | P5 | 12 |
| 47 | P8 | 18 |
| 48 | P11 | 15 |
| 49 | P12 | 15 |
| 50 | P13 | 18 |
| 51 | P14 | 12 |
| 52 | P18 | 12 |
| 53 | P20 | 18 |
| 54 (V) | Vgl. 1 | 15 |
| 55 (V) | Vgl. 2 | 9 |
| 56 (V) | Vgl. 3 | 21 |
| 57 (V) | Vgl. 7 | 27 |

**Tabelle 7: Pour Point-Absenkung in Testöl O4; blank PP +12**

| Beispiel | Polymer | 100 ppm | 200 ppm |
|---|---|---|---|
| 58 | P1 | 3 | -6 |
| 59 | P2 | 0 | -12 |
| 60 | P3 | -3 | -15 |
| 61 | P4 | 9 | 3 |
| 62 | P5 | 6 | 0 |
| 63 | P6 | 0 | -12 |
| 64 | P10 | 0 | -12 |
| 65 | P13 | -9 | -12 |
| 66 | P15 | 3 | -6 |
| 67 | P16 | -3 | -9 |
| 68 | P17 | 9 | 3 |
| 69 | P18 | 9 | 0 |
| 70 | P19 | 6 | -6 |
| 71 | P21 | 3 | -9 |
| 72 (V) | Vgl. 1 | -9 | -15 |
| 73 (V) | Vgl. 2 | -6 | -15 |
| 74 (V) | Vgl. 3 | 9 | 6 |
| 75 (V) | Vgl. 5 | 3 | -3 |
| 76 (V) | Vgl. 6 | 6 | -3 |
| 77 (V) | Vgl. 7 | 9 | 9 |

**Tabelle 8: Pour Point-Absenkung am Raffinerierückstand O5; blank PP +18**

| Beispiel | Polymer | 1500 ppm |
|---|---|---|
| 78 | P1 | -9 |
| 79 | P2 | 0 |
| 80 | P3 | -3 |
| 81 | P4 | 3 |
| 82 | P5 | -6 |
| 83 | P6 | 0 |
| 84 | P7 | 6 |
| 85 | P8 | 3 |
| 86 | P9 | -9 |
| 87 | P11 | -3 |
| 88 | P12 | 3 |
| 89 | P14 | -6 |
| 90 | P15 | -6 |
| 91 | P16 | 9 |
| 92 | P17 | -9 |
| 93 | P18 | -12 |
| 94 | P21 | -9 |
| 95 (V) | Vgl. 1 | -3 |
| 96 (V) | Vgl. 2 | -6 |
| 97 (V) | Vgl. 4 | -3 |

Zur Beurteilung der Fließfähigkeit von Konzentraten der neuen Polymerzusammensetzungen während längerer Lagerung bei niedrigen Temperaturen wurden die Polymerzusammensetzungen bei 50 °C in Solvent Naphtha (hochsiedendes Aromatengemisch mit Siedebereich 185 - 215 °C) mit einem Polymergehalt von 35 Gew.-% gelöst und langsam auf Raumtemperatur abkühlen gelassen. Nach 15 Stunden Lagerung einer 100 ml-Probe bei Raumtemperatur wurde die Fließfähigkeit in Analogie zu ASTM D79 durch Kippen des Probengefäßes geprüft. Eine Bewegung der Oberfläche beim Kippen des Probeglases zeigte die Fließfähigkeit der Probe und wurde mit "OK", die Anwesenheit von Gelstrukturen zusätzlich mit "Gel" protokolliert. Die Produkte wurden anschließend bei 0 °C in einer Klimakammer gelagert. Die erste Beurteilung der Fließfähigkeit erfolgte nach 6 Stunden Lagerung bei 0 °C, die Beurteilung der Langzeit-Fließfähigkeit/-Pumpbarkeit erfolgte nach weiteren 10 Tagen Lagerung bei 0 °C nach den gleichen Prüf- und Beurteilungsprinzipien. Bei der Beurteilung der Fließfähigkeit wurde zudem auf eine mögliche Gelbildung / Inhomogenität geprüft.

**Tabelle 9: Beurteilung von Lagerstabilität und Fließfähigkeit**

| Beispiel | Polymer | Fließfähigkeit RT | Fließfähigkeit 0°C 6 h Lagerung | Fließfähigkeit 0°C 10 Tage Lagerung |
|---|---|---|---|---|
| 98 | P1 | OK | OK | OK |
| 99 | P2 | OK | fest | fest |
| 100 | P3 | OK | fest | fest |
| 101 | P4 | OK | OK | OK |
| 102 | P5 | OK | OK | OK |
| 103 | P5 | OK | OK | OK |
| 104 | P6 | OK | OK | OK |
| 105 | P7 | OK | OK | OK |
| 106 | P8 | OK | OK | OK |
| 107 | P9 | OK | OK | OK |
| 108 | P10 | OK | OK | OK |
| 109 | P11 | OK | OK | OK |
| 110 | P19 | OK | OK | OK |
| 111 | P20 | OK | OK | OK |
| 112 | P21 | OK | OK | OK |
| 113 (V) | Vgl. 1 | fließfähig / Gel | fest | fest |
| 114 (V) | Vgl. 2 | fest | fest | fest |
| 115 (V) | Vgl. 3 | OK | OK | zähflüssig / Gel |
| 116 (V) | Vgl. 4 | OK | fest | fest |
| 117 (V) | Vgl. 5 | OK | fest | fest |
| 118 (V) | Vgl. 6 | OK | zähflüssig / Gel | fest |

Die erfindungsgemäßen Additive besitzen als Konzentrate eine sehr gute Fließfähigkeit bei niedrigen Temperaturen und gleichzeitig eine überlegene Wirksamkeit auf den Pour Point von Rohölen. Die in ähnlichem Zusammenhang vorgeschlagenen kurzkettigen bzw. verzweigten Alkylacrylate der WO 2014/095412 senken den Eigenstockpunkt der Additive nur geringfügig, sind jedoch nicht zur Cokristallisation mit den aus dem zu additivierenden Öl ausfallenden Paraffinen befähigt und schwächen somit die Wirksamkeit der Additive in stärkerem Ausmaß.

## Patentansprüche

1. Polymerzusammensetzung erhältlich durch radikalische Polymerisation von
A) 95 - 40 Gew.-% Alkyl(meth)acrylat enthaltend
Ai) 20 - 95 Gew.-% mindestens eines Alkyl(meth)acrylats mit 16 bis 40 C-Atomen im Alkylrest und
Aii) 5 - 80 Gew.-% mindestens eines (Meth)acrylsäureesters eines in 2-Stellung zur Hydroxylgruppe einen C₆-C₂₀-Alkylrest tragenden C₈-C₂₂-Alkohols in Gegenwart von
B) 5 - 60 Gew.-% eines Ethylen-Copolymers.

2. Polymerzusammensetzung gemäß Anspruch 1, **dadurch gekennzeichnet, dass** die Alkyl(meth)acrylate Ai) die allgemeine Formel (1) aufweisen
H₂C = C(R²) - COOR³ (1)
wobei
R² für Wasserstoff oder eine Methylgruppe,
R³ für einen linearen Alkylrest mit 16 bis 40 Kohlenstoffatomen, vorzugsweise mit 18 bis 36 Kohlenstoffatomen steht.

3. Polymerzusammensetzung gemäß Anspruch 1 und/oder 2, **dadurch gekennzeichnet, dass** die Alkyl(meth)acrylate Aii) die allgemeine Formel (2) aufweisen 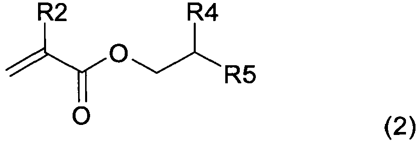 wobei
R² für Wasserstoff oder eine Methylgruppe,
R⁴ und R⁵ unabhängig voneinander für einen gesättigten, linearen Alkylrest mit 6 bis 20 C-Atomen stehen und die Summe der Kohlenstoffatome in R⁴ und R⁵ zwischen 16 und 40 liegt.

4. Polymerzusammensetzung gemäß einem oder mehreren der Ansprüche 1 bis 3, **dadurch gekennzeichnet, dass** das Alkyl(meth)acrylat A) 25 bis 90 Gew.-%, vorzugsweise 30 bis 60 Gew.-% mindestens eines Alkyl(meth)acrylats Ai) bezogen auf das Gesamtgewicht von A) enthält.

5. Polymerzusammensetzung gemäß einem oder mehreren der Ansprüche 1 bis 4, **dadurch gekennzeichnet, dass** das Alkyl(meth)acrylat A) 10 bis 60 Gew.-%, vorzugsweise 20 bis 55 Gew.-% mindestens eines Alkyl(meth)acrylats Aii) bezogen auf das Gesamtgewicht von A) enthält.

6. Polymerzusammensetzung gemäß einem oder mehreren der Ansprüche 1 bis 5, **dadurch gekennzeichnet, dass** das Alkyl(meth)acrylat A) bis zu 40 Gew.-%, einer oder mehrerer weiterer Monomere Aiii) enthält.

7. Polymerzusammensetzung gemäß Anspruch 6, **dadurch gekennzeichnet, dass** die weiteren Monomere Aiii) ausgewählt sind aus Vinylestern von Carbonsäuren mit 1 bis 20 C-Atomen, α-Olefinen mit 6 bis 40 C-Atomen, Vinylaromaten, ethylenisch ungesättigten Dicarbonsäuren sowie deren Anhydriden und Estern mit C₁₀-C₃₀-Fettalkoholen, Acrylsäure, Methacrylsäure, weitere funktionelle Gruppen tragenden ethylenisch ungesättigten Verbindungen sowie Vinyl- und Allylpolyglykolen.

8. Polymerzusammensetzung gemäß Anspruch 6, **dadurch gekennzeichnet, dass** die weiteren Monomere Aiii) der Formel (3) entsprechen
H₂C = C(R²) - COOR⁶ (3)
wobei
R² für Wasserstoff oder eine Methylgruppe,
R⁶ für einen linearen Alkylrest mit 1 bis 11 C-Atomen, für einen verzweigten Alkylrest mit 4 bis 17 Kohlenstoffatomen oder für einen zyklischen Alkylrest mit 5 bis 20 Kohlenstoffatomen steht.

9. Polymerzusammensetzung gemäß Anspruch 6, **dadurch gekennzeichnet, dass** es sich bei den weiteren Monomeren Aiii) um
Vinyl- oder Allylpolyglykole der Formel (4) handelt 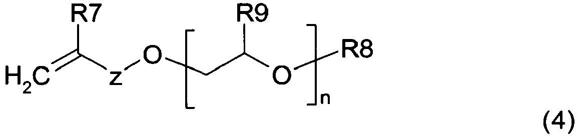 worin
R⁷ für Wasserstoff oder Methyl steht,
Z für C₁-C₃-Alkylen oder eine Einfachbindung zwischen dem R⁷ tragenden Kohlenstoffatom und dem Sauerstoffatom steht,
R⁸ für Wasserstoff, C₁-C₃₀-Alkyl, Cycloalkyl, Aryl oder -C(O)-R¹⁰ steht,
R⁹ für Wasserstoff oder C₁-C₂₀-Alkyl steht,
R¹⁰ für C₁-C₃₀-Alkyl, C₃-C₃₀-Alkenyl, Cycloalkyl oder Aryl steht und
m eine Zahl von 1 bis 50, vorzugsweise 1 bis 30 bedeutet.

10. Polymerzusammensetzung gemäß einem oder mehreren der Ansprüche 1 bis 9, wobei das Ethylen-Copolymer neben Ethylen 4 bis 18 mol-% mindestens eines Vinylesters, Acrylsäureesters, Methacrylsäureesters, Alkylvinylethers und/oder Alkens enthält.

11. Polymerzusammensetzung gemäß einem oder mehreren der Ansprüche 1 bis 10, wobei das Ethylen-Copolymer ein Copolymer aus Ethylen und dem Vinylester einer C₁-C₂₄-Carbonsäure, einem C₁-C₂₂-Alkyl(meth)acrylat und/oder einem C₃-C₂₄-Olefin ist.

12. Polymerzusammensetzung gemäß einem oder mehreren der Ansprüche 1 bis 11, wobei das Ethylen-Copolymer ein Copolymer aus Ethylen und mindestens einem Vinylester der Formel (6) ist
CH₂ = CH - OCOR¹¹ (6)
worin
R¹¹ C₁- bis C₃₀-Alkyl, vorzugsweise C₄- bis C₁₆-Alkyl, speziell C₆- bis C₁₂-Alkyl bedeutet.

13. Polymerzusammensetzung gemäß einem oder mehreren der Ansprüche 1 bis 12, wobei das Ethylen-Copolymer als Comonomer Vinylacetat enthält.

14. Polymerzusammensetzung gemäß einem oder mehreren der Ansprüche 1 bis 13, wobei das Ethylen-Copolymer ein Copolymer aus Ethylen und mindestens einem Acrylsäure- oder Methacrylsäureester der Formel (7) ist
CH₂ = CR¹²- COOR¹³ (7)
worin
R¹² Wasserstoff oder Methyl und
R¹³ C₁- bis C₃-Alkyl, vorzugsweise C₄- bis C₁₆-Alkyl, speziell C₆- bis C₁₂-Alkyl bedeutet.

15. Polymerzusammensetzung gemäß einem oder mehreren der Ansprüche 1 bis 14, wobei das Ethylen-Copolymer einen gemäß DIN 53735 bei 190 °C und einer Auflagekraft von 2,16 kg gemessenen MFI190-Wert zwischen 0,1 und 1.200 g/10 min und vorzugsweise zwischen 1 und 900 g/10 min aufweist.

16. Polymerzusammensetzung gemäß einem oder mehreren der Ansprüche 1 bis 15, erhältlich durch radikalische Polymerisation von A und B in Gegenwart eines Lösemittels, wobei dessen Anteil an der Gesamtmenge an A, B und Lösemittel sowie gegebenenfalls weiteren Hilfsstoffen zwischen 35 und 80 Gew.-% liegt.

17. Polymerzusammensetzung gemäß einem oder mehreren der Ansprüche 6 bis 16, worin die Alkyl(meth)acrylate A) 20 bis 93, insbesondere 25 bis 85 und speziell 30 bis 65 Gew.-% Monomere Ai) enthalten.

18. Polymerzusammensetzung gemäß einem oder mehreren der Ansprüche 6 bis 17, worin die Alkyl(meth)acrylate A) 5 bis 78, insbesondere 10 bis 65 und speziell 15 bis 55 Gew.-% Monomere Aii) enthalten.

19. Polymerzusammensetzung gemäß einem oder mehreren der Ansprüche 6 bis 18, worin die Alkyl(meth)acrylate A) 2 bis 40, insbesondere 5 bis 40 und speziell 5 bis 30 Gew.-% Monomere Aiii) enthalten.

20. Verfahren zur Herstellung von Polymerzusammensetzungen gemäß einem oder mehreren der Ansprüche 1 bis 19, bei dem eine Mischung aus
A) 95 - 40 Gew.-% Alkyl(meth)acrylat (A) enthaltend
Ai) 20 - 95 Gew.-% mindestens eines Alkyl(meth)acrylats mit 16 bis 40 C-Atomen im Alkylrest und
Aii) 5 - 80 Gew.-% mindestens eines (Meth)acrylsäureesters eines in 2-Stellung zur Hydroxylgruppe einen C₆-C₂₀-Alkylrest tragenden C₈-C₂₂-Alkohols in Gegenwart von
B) 5 - 60 Gew.-% eines Ethylen-Copolymers
durch Zugabe eines Radikalkettenstarters copolymerisiert wird.

21. Verfahren nach Anspruch 20, bei dem die Polymerisation in Gegenwart der 0,1 bis 10-fachen der Menge an Lösemittel bezogen auf die Menge an A) und B) durchgeführt wird.

22. Verfahren gemäß Anspruch 20 und/oder 21, bei dem das Lösemittel ein aliphatischer Kohlenwasserstoff oder ein aliphatisches Kohlenwasserstoffgemisch mit einem Flammpunkt von mindestens 60 °C ist.

23. Konzentrat, enthaltend 10 bis 80 Gew.-% der Polymerzusammensetzung gemäß einem oder mehreren der Ansprüche 1 bis 19 und 90 bis 20 Gew.-% organisches Lösemittel.

24. Konzentrat nach Anspruch 23, wobei das organische Lösemittel eine Mischung aus aliphatischen und aromatischen Kohlenwasserstoffen ist.

25. Konzentrat gemäß Anspruch 23 und/oder 24, wobei das organische Lösemittel mindestens 20 Gew.-% aromatische Kohlenwasserstoffe enthält.

26. Konzentrat gemäß einem oder mehreren der Ansprüche 23 bis 25, das zusätzlich zur Polymerzusammensetzung einen Wachs-Dispergator und/oder einen Asphaltendispergator enthält.

27. Verwendung von Polymerzusammensetzungen oder Konzentraten gemäß einem oder mehreren der Ansprüche 1 bis 19 und 23 bis 26 zur Verbesserung der Kälteeigenschaften von paraffinhaltigen Mineralölen, ausgewählt auch Rohölen, Rückstandsölen und Produkten der Mineralöldestillation.

28. Verwendung gemäß Anspruch 27, wobei das paraffinhaltige Mineralöl Rohöl ist.

29. Verwendung gemäß Anspruch 27 und/oder 28, **dadurch gekennzeichnet, dass** dem paraffinhaltigen Mineralöl 10 bis 10.000 Gew.-ppm der Polymerzusammensetzung gemäß einem oder mehreren der Ansprüche 1 bis 19 zugesetzt werden.

## Claims

1. Polymer composition obtainable by free-radical polymerization of
A) 95-40% by weight of alkyl (meth)acrylate comprising
Ai) 20-95% by weight of at least one alkyl (meth)acrylate having 16 to 40 carbon atoms in the alkyl radical and
Aii) 5-80% by weight of at least one (meth)acrylic ester of a C₈-C₂₂ alcohol that bears a C₆-C₂₀-alkyl radical in the 2 position to the hydroxyl group, where Ai) and Aii) are different from each other, in the presence of
B) 5-60% by weight of an ethylene copolymer, in which the alkyl (meth)acrylates Ai) have the general formula (1)
H₂C = C(R²) - COOR³ (1)
where
R² is hydrogen or a methyl group,
R³ is a linear alkyl radical having 16 to 40 carbon atoms.

2. Polymer composition according to Claim 1, in which R³ is a linear alkyl radical having 18 to 36 carbon atoms.

3. Polymer composition according to Claim 1 and/or 2, **characterized in that** the alkyl (meth)acrylates Aii) have the general formula (2) 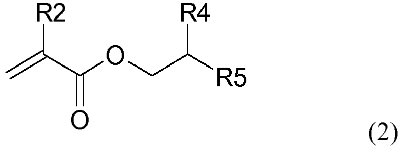 where
R² is hydrogen or a methyl group,
R⁴ and R⁵ are independently a saturated linear alkyl radical having 6 to 20 carbon atoms and the sum total of the carbon atoms in R⁴ and R⁵ is between 16 and 40.

4. Polymer composition according to one or more of Claims 1 to 3, **characterized in that** the alkyl (meth)acrylate A) contains 25% to 90% by weight, preferably 30% to 60% by weight, of at least one alkyl (meth)acrylate Ai) based on the total weight of A).

5. Polymer composition according to one or more of Claims 1 to 4, **characterized in that** the alkyl (meth)acrylate A) contains 10% to 60% by weight, preferably 20% to 55% by weight, of at least one alkyl (meth)acrylate Aii) based on the total weight of A).

6. Polymer composition according to one or more of Claims 1 to 5, **characterized in that** the alkyl (meth)acrylate A) contains up to 40% by weight of one or more further monomers Aiii).

7. Polymer composition according to Claim 6, **characterized in that** the further monomers Aiii) are selected from vinyl esters of carboxylic acids having 1 to 20 carbon atoms, α-olefins having 6 to 40 carbon atoms, vinylaromatics, ethylenically unsaturated dicarboxylic acids and the anhydrides and esters thereof with C₁₀-C₃₀ fatty alcohols, acrylic acid, methacrylic acid, ethylenically unsaturated compounds bearing further functional groups, and vinyl and allyl polyglycols.

8. Polymer composition according to Claim 6, **characterized in that** the further monomers Aiii) conform to the formula (3)
H₂C = C(R²) - COOR⁶ (3)
where
R² is hydrogen or a methyl group,
R⁶ is a linear alkyl radical having 1 to 11 carbon atoms, is a branched alkyl radical having 4 to 17 carbon atoms or is a cyclic alkyl radical having 5 to 20 carbon atoms.

9. Polymer composition according to Claim 6, **characterized in that** the further monomers Aiii) are
vinyl or allyl polyglycols of the formula (4) 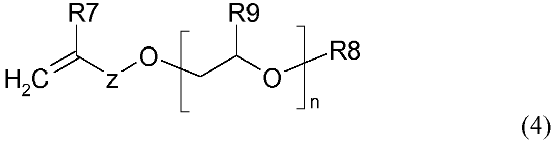 in which
R⁷ is hydrogen or methyl,
Z is C₁-C₃-alkylene or a single bond between the R⁷-bearing carbon atom and the oxygen atom,
R⁸ is hydrogen, C₁-C₃₀-alkyl, cycloalkyl, aryl or -C(O)-R¹⁰,
R⁹ is hydrogen or C₁-C₂₀-alkyl,
R¹⁰ is C₁-C₃₀-alkyl, C₃-C₃₀-alkenyl, cycloalkyl or aryl and
m is a number from 1 to 50, preferably 1 to 30.

10. Polymer composition according to one or more of Claims 1 to 9, wherein the ethylene copolymer contains, as well as ethylene, 4 to 18 mol% of at least one vinyl ester, acrylic ester, methacrylic ester, alkyl vinyl ether and/or alkene.

11. Polymer composition according to one or more of Claims 1 to 10, wherein the ethylene copolymer is a copolymer of ethylene and the vinyl ester of a C₁-C₂₄ carboxylic acid, a C₁-C₂₂-alkyl (meth)acrylate and/or a C₃-C₂₄ olefin.

12. Polymer composition according to one or more of Claims 1 to 11, wherein the ethylene copolymer is a copolymer of ethylene and at least one vinyl ester of the formula (6)
CH₂ = CH - OCOR¹¹ (6)
in which
R¹¹ is C₁- to C₃₀-alkyl, preferably C₄- to C₁₆-alkyl, especially C₆- to C₁₂-alkyl.

13. Polymer composition according to one or more of Claims 1 to 12, wherein the ethylene copolymer contains vinyl acetate as comonomer.

14. Polymer composition according to one or more of Claims 1 to 13, wherein the ethylene copolymer is a copolymer of ethylene and at least one acrylic or methacrylic ester of the formula (7)
CH₂ = CR¹² - COOR¹³ (7)
in which
R¹² is hydrogen or methyl and
R¹³ is C₁- to C₃₀-alkyl, preferably C₄- to C₁₆-alkyl, especially C₆- to C₁₂-alkyl.

15. Polymer composition according to one or more of Claims 1 to 14, wherein the ethylene copolymer has an MFI190 value measured according to DIN 53735 at 190°C and an applied load of 2.16 kg of between 0.1 and 1200 g/10 min and preferably between 1 and 900 g/10 min.

16. Polymer composition according to one or more of Claims 1 to 15, obtainable by free-radical polymerization of A and B in the presence of a solvent, where the proportion thereof in the total amount of A, B and solvent and of any further auxiliaries is between 35% and 80% by weight.

17. Polymer composition according to one or more of Claims 6 to 16, in which the alkyl (meth)acrylates A) contain 20% to 93%, particularly 25% to 85% and especially 30% to 65% by weight of monomers Ai).

18. Polymer composition according to one or more of Claims 6 to 17, in which the alkyl (meth)acrylates A) contain 5% to 78%, particularly 10% to 65% and especially 15% to 55% by weight of monomers Aii).

19. Polymer composition according to one or more of Claims 6 to 18, in which the alkyl (meth)acrylates A) contain 2% to 40%, particularly 5% to 40% and especially 5% to 30% by weight of monomers Aiii).

20. Process for preparing polymer compositions according to one or more of Claims 1 to 19, in which a mixture of
A) 95-40% by weight of alkyl (meth)acrylate (A) comprising
Ai) 20-95% by weight of at least one alkyl (meth)acrylate having 16 to 40 carbon atoms in the alkyl radical and
Aii) 5-80% by weight of at least one (meth)acrylic ester of a C₈-C₂₂ alcohol that bears a C₆-C₂₀-alkyl radical in the 2 position to the hydroxyl group, where Ai) and Aii) are different from one another, in the presence of
B) 5-60% by weight of an ethylene copolymer,
is copolymerized by adding a free-radical chain initiator, in which the alkyl (meth)acrylates Ai) have the general formula (1)
H₂C = C(R²) - COOR³ (1)
where
R² is hydrogen or a methyl group,
R³ is a linear alkyl radical having 16 to 40 carbon atoms, preferably having 18 to 36 carbon atoms.

21. Process according to Claim 20, in which the polymerization is conducted in the presence of 0.1 to 10 times the amount of solvent based on the amount of A) and B).

22. Process according to Claim 20 and/or 21, in which the solvent is an aliphatic hydrocarbon or an aliphatic hydrocarbon mixture having a flashpoint of at least 60°C.

23. Concentrate comprising 10% to 80% by weight of the polymer composition according to one or more of Claims 1 to 19 and 90% to 20% by weight of organic solvent.

24. Concentrate according to Claim 23, wherein the organic solvent is a mixture of aliphatic and aromatic hydrocarbons.

25. Concentrate according to Claim 23 and/or 24, wherein the organic solvent contains at least 20% by weight of aromatic hydrocarbons.

26. Concentrate according to one or more of Claims 23 to 25, comprising, in addition to the polymer composition, a wax dispersant and/or an asphaltene dispersant.

27. Use of polymer compositions or concentrates according to one or more of Claims 1 to 19 and 23 to 26 for improving the cold properties of paraffin-containing mineral oils selected also crude oils, residue oils and products from mineral oil distillation.

28. Use according to Claim 27, wherein the paraffin-containing mineral oil is crude oil.

29. Use according to Claim 27 and/or 28, **characterized in that** 10 to 10 000 ppm by weight of the polymer composition according to one or more of Claims 1 to 19 are added to the paraffin-containing mineral oil.

## Revendications

1. Composition de polymère pouvant être obtenue par polymérisation radicalaire de
A) 95 à 40 % en poids de (méth)acrylate d'alkyle contenant
Ai) 20 à 95 % en poids d'au moins un (méth)acrylate d'alkyle comportant 16 à 40 atomes de C dans le radical alkyle et
Aii) 5 à 80 % en poids d'au moins un ester d'acide (méth) acrylique d'un C₈₋₂₂-alcool portant un radical C₆₋₂₀-alkyle en position 2 par rapport au groupe hydroxyle, Ai) et Aii) étant différents l'un de l'autre, en présence de
B) 5 à 60 % en poids d'un copolymère d'éthylène, les (méth)acrylates d'alkyle Ai) présentant la formule générale (1)
H₂C = C(R²) - COOR³ (1)
R² représentant hydrogène ou un groupe méthyle,
R³ représentant un radical alkyle linéaire comportant 16 à 40 atomes de carbone.

2. Composition de polymère selon la revendication 1, R³ représentant un radical alkyle linéaire comportant 18 à 36 atomes de carbone.

3. Composition de polymère selon la revendication 1 et/ou 2, **caractérisée en ce que** les (méth)acrylates d'alkyle Aii) présentent la formule générale (2) 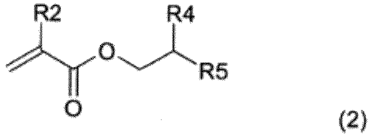
R² représentant hydrogène ou un groupe méthyle,
R⁴ et R⁵ indépendamment l'un de l'autre représentant un radical alkyle linéaire saturé comportant 6 à 20 atomes de C et la somme des atomes de carbone dans R⁴ et R⁵ se situant entre 16 et 40.

4. Composition de polymère selon une ou plusieurs des revendications 1 à 3, **caractérisée en ce que** le (méth)acrylate d'alkyle A) contient 25 à 90 % en poids, de préférence 30 à 60 % en poids d'au moins un (méth)acrylate d'alkyle Ai) par rapport au poids total de A).

5. Composition de polymère selon une ou plusieurs des revendications 1 à 4, **caractérisée en ce que** le (méth)acrylate d'alkyle A) contient 10 à 60 % en poids, de préférence 20 à 55 % en poids d'au moins un (méth)acrylate d'alkyle Aii) par rapport au poids total de A).

6. Composition de polymère selon une ou plusieurs des revendications 1 à 5, **caractérisée en ce que** le (méth)acrylate d'alkyle A) contient jusqu'à 40 % en poids d'un ou plusieurs autres monomères Aiii).

7. Composition de polymère selon la revendication 6, **caractérisée en ce que** les autres monomères Aiii) sont choisis parmi des esters vinyliques d'acides carboxyliques comportant 1 à 20 atome(s) de C, des α-oléfines comportant 6 à 40 atomes de C, des composés aromatiques vinyliques, des acides dicarboxyliques éthyléniquement insaturés ainsi que leurs anhydrides et esters avec des alcools gras en C₁₀₋₃₀, l'acide acrylique, l'acide méthacrylique, d'autres composés éthyléniquement insaturés portant des groupes fonctionnels ainsi que des polyglycols vinyliques et allyliques.

8. Composition de polymère selon la revendication 6, **caractérisée en ce que** les autres monomères Aiii) correspondent à la formule (3)
**H₂C = C(R²)** - **COOR⁶** (3)
R² représentant hydrogène ou un groupe méthyle,
R⁶ représentant un radical alkyle linéaire comportant 1 à 11 atome(s) de C, un radical alkyle ramifié comportant 4 à 17 atomes de carbone ou un radical alkyle cyclique comportant 5 à 20 atomes de carbone.

9. Composition de polymère selon la revendication 6, **caractérisée en ce que** les autres monomères Aiii) sont des polyglycols vinyliques ou allyliques de formule (4) 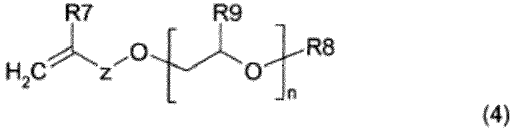 dans laquelle
R⁷ représente hydrogène ou méthyle,
Z représente C₁₋₃-alkylène ou une simple liaison entre l'atome de carbone portant R⁷ et l'atome d'oxygène,
R⁸ représente hydrogène, C₁₋₃₀-alkyle, cycloalkyle, aryle ou -C(O)-R¹⁰,
R⁹ représente hydrogène ou C₁₋₂₀-alkyle,
R¹⁰ représente C₁₋₃₀-alkyle, C₃₋₃₀-alcényle, cycloalkyle ou aryle et
m signifie un nombre de 1 à 50, de préférence de 1 à 30.

10. Composition de polymère selon une ou plusieurs des revendications 1 à 9, le copolymère d'éthylène, mis à part l'éthylène, contenant 4 à 18 % en moles d'au moins un ester vinylique, d'au moins un ester d'acide acrylique, d'au moins un ester d'acide méthacrylique, d'au moins un alkylvinyléther et/ou d'au moins un alcène.

11. Composition de polymère selon une ou plusieurs des revendications 1 à 10, le copolymère d'éthylène étant un copolymère d'éthylène et de l'ester vinylique d'un acide C₁₋₂₄-carboxylique, d'un (méth) acrylate de C₁₋₂₂-alkyle et/ou d'une C₃₋₂₄-oléfine.

12. Composition de polymère selon une ou plusieurs des revendications 1 à 11, le copolymère d'éthylène étant un copolymère d'éthylène et d'au moins un ester vinylique de formule (6)
**CH₂ = CH** - **OCOR¹¹** (6)
dans laquelle
R¹¹ signifie C₁₋₃₀-alkyle, de préférence C₄₋₁₆-alkyle, en particulier C₆₋₁₂-alkyle.

13. Composition de polymère selon une ou plusieurs des revendications 1 à 12, le copolymère d'éthylène contenant de l'acétate de vinyle en tant que comonomère.

14. Composition de polymère selon une ou plusieurs des revendications 1 à 13, le copolymère d'éthylène étant un copolymère d'éthylène et d'au moins un ester d'acide acrylique ou d'acide méthacrylique de formule (7)
**CH₂ = CR¹² - COOR¹³** **(7)**
R¹² signifie hydrogène ou méthyle et
R¹³ signifie C₁₋₃₀-alkyle, de préférence C₄₋₁₆-alkyle, en particulier C₆₋₁₂-alkyle.

15. Composition de polymère selon une ou plusieurs des revendications 1 à 14, le copolymère d'éthylène présentant une valeur de MFI190 comprise entre 0,1 et 1200 g/10 min et de préférence entre 1 et 900 g/10 min, mesurée conformément à la norme DIN 53735 à 190 °C et à une force d'application de 2,16 kg.

16. Composition de polymère selon une ou plusieurs des revendications 1 à 15, pouvant être obtenue par polymérisation radicalaire de A et de B en présence d'un solvant, dont la part dans la quantité totale de A, B et de solvant ainsi qu'éventuellement d'autres adjuvants, se situe entre 35 et 80 % en poids.

17. Composition de polymère selon une ou plusieurs des revendications 6 à 16, dans laquelle les (méth)acrylates d'alkyle A) contiennent 20 à 93, particulièrement 25 à 85 et en particulier 30 à 65 % en poids de monomères Ai).

18. Composition de polymère selon une ou plusieurs des revendications 6 à 17, dans laquelle les (méth)acrylates d'alkyle A) contiennent 5 à 78, particulièrement 10 à 65 et en particulier 15 à 55 % en poids de monomères Aii).

19. Composition de polymère selon une ou plusieurs des revendications 6 à 18, dans laquelle les (méth)acrylates d'alkyle A) contiennent 2 à 40, particulièrement 5 à 40 et en particulier 5 à 30 % en poids de monomères Aiii).

20. Procédé pour la préparation de compositions de polymère selon une ou plusieurs des revendications 1 à 19, dans lequel un mélange de
A) 95 à 40 % en poids de (méth)acrylate d'alkyle (A) contenant
Ai) 20 à 95 % en poids d'au moins un (méth)acrylate d'alkyle comportant 16 à 40 atomes de C dans le radical alkyle et
Aii) 5 à 80 % en poids d'au moins un ester d'acide (méth) acrylique d'un C₈₋₂₂-alcool portant un radical C₆₋₂₀-alkyle en position 2 par rapport au groupe hydroxyle, Ai) et Aii) étant différents l'un de l'autre, en présence de
B) 5 à 60 % en poids d'un copolymère d'éthylène, est copolymérisé par ajout d'un initiateur de chaîne radicalaire, les (méth)acrylates d'alkyle Ai) présentant la formule générale (1)
**H₂C = C(R²)** - **COOR³** **(1)**
R² représentant hydrogène ou un groupe méthyle,
R³ représentant un radical alkyle linéaire comportant 16 à 40 atomes de carbone, de préférence comportant 18 à 36 atomes de carbone.

21. Procédé selon la revendication 20, dans lequel la polymérisation est réalisée en présence d'une quantité de solvant d'un facteur de 0,1 à 10 par rapport à la quantité de A) et B).

22. Procédé selon la revendication 20 et/ou 21, dans lequel le solvant est un hydrocarbure aliphatique ou un mélange d'hydrocarbures aliphatiques, présentant un point d'éclair d'au moins 60 °C.

23. Concentré, contenant 10 à 80 % en poids de la composition de polymère selon une ou plusieurs des revendications 1 à 19 et 90 à 20 % en poids d'un solvant organique.

24. Concentré selon la revendication 23, le solvant organique étant un mélange d'hydrocarbures aliphatiques et aromatiques.

25. Concentré selon la revendication 23 et/ou 24, le solvant organique contenant au moins 20 % en poids d'hydrocarbures aromatiques.

26. Concentré selon une ou plusieurs des revendications 23 à 25, qui contient en plus de la composition de polymère un agent dispersant de cire et/ou un agent dispersant d'asphalte.

27. Utilisation de compositions de polymère ou de concentrés selon une ou plusieurs des revendications 1 à 19 et 23 à 26 pour l'amélioration des propriétés à froid d'huiles minérales contenant de la paraffine, choisies parmi des huiles brutes, des huiles résiduelles et des produits de la distillation d'huile minérale.

28. Utilisation selon la revendication 27, l'huile minérale contenant de la paraffine étant de l'huile brute.

29. Utilisation selon la revendication 27 et/ou 28, **caractérisée en ce que** 10 à 10.000 ppm en poids de la composition de polymère selon une ou plusieurs des revendications 1 à 19 sont ajoutés à l'huile minérale contenant de la paraffine.
